# EUROPEAN PATENT SPECIFICATION

(11) **EP 4 197 231 B1**
(45) Date of publication and mention of the grant of the patent: **30.07.2025**
(21) Application number: 21759303.7
(22) Date of filing: 16.08.2021
(51) Int. Cl.: H04W 36/00, H04W 36/36, H04W 36/32

(54) **METHOD AND APPARATUS FOR MANAGING CONDITIONAL HANDOVER OF A USER EQUIPMENT**
VERFAHREN UND VORRICHTUNG ZUR VERWALTUNG VON BEDINGTEM HANDOVER EINES BENUTZERGERÄTS
PROCÉDÉ ET APPAREIL POUR GÉRER UN TRANSFERT CONDITIONNEL D'UN ÉQUIPEMENT UTILISATEUR

(30) Priority: 17.08.2020 US 202063066351 P
(43) Date of publication of application: 21.06.2023
(73) Proprietor: Telefonaktiebolaget LM Ericsson (publ), 164 83 Stockholm (SE)
(72) Inventor: HÉVIZI, László, 2081 Piliscsaba (HU); PALAIOS, Alexandros, 47441 Moers (DE)
(74) Representative: Ericsson
(86) International application number: PCT/EP2021/072665
(87) International publication number: WO 2022/038067

(56) References cited:
- WO-A1-2020/087432
- WO-A1-2020/132427
- CN-A- 110 536 365
- US-A1- 2019 289 505

## Description

### Technical Field

The present disclosure relates to a method for managing Conditional Handover of a User Equipment (UE) in a cellular communication network. The present disclosure also relates to a management node, and to a computer program and a computer program product configured, when run on a computer to carry out a method for managing Conditional Handover of UE in a cellular communication network.

### Background

Mobility enhancements, which improve the speed and robustness of handovers, are currently under development at the 3^{rd} Generation Partnership Project (3GPP), and Conditional Handover is one of the techniques being proposed. Conditional Handover prepares both a UE and a target cell, possibly multiple target cells, for a potential handover, with the preparation taking place typically before the handover condition is triggered. After the preparation for handover has taken place, when the handover condition eventually triggers, the UE immediately performs a handover to the already prepared target cell, with no direct handover command sent from the serving cell.

The process for ensuring smooth handovers in current Long Term Evolution (LTE) systems is the so-called Automatic Neighborhood Relations (ANR) process, which is one of the Self-Organized Network (SON) features standardized by 3GPP. ANR automatically maintains the neighbor cell table for each cell of a network, and the serving cell for any given UE uses this table in preparing handovers. An ANR table is made for an entire cell, and it includes all possible neighbor cells. The configuration of Conditional Handover, however, is relatively resource intensive, and should therefore only focus on the most probable target cells for upcoming handovers. There is no current solution to find suitable target cells for future handovers with a safe look ahead time. Current systems only track cell level location of active users, which is sufficient for ANR but not for more accurate prediction of target cells. More precise UE positioning is performed only on special request, for example in the event of emergency calls. In addition, existing techniques for precise UE positioning lag behind real-time, and are consequently unsuitable for supporting the identification of likely target cells for future handovers. Consequently, although a procedure for conditional handover has been drafted by 3GPP, the timing and content of the necessary RRC configuration messages have yet to be established. Patent publications US 2019/289505 A1, WO 2020/132427 A1, CN 110 536 365 A, and WO 2020/087432 A1 disclose different procedures of conditional handover configuration based on location and/or trajectory of a UE.

### Summary

It is an aim of the present disclosure to provide a method, management node, and computer readable medium which at least partially address one or more of the challenges discussed above. It is a further aim of the present disclosure to provide a method, management node and computer readable medium which facilitate the initiation of Conditional Handover for a UE at an appropriate time and to suitable neighbour cells of a communication network.

According to a first aspect of the present disclosure, there is provided a computer implemented method for managing Conditional Handover of a User Equipment (UE) in a cellular communication network, wherein the communication network comprises a plurality of radio resources, each radio resource defining a dimension of a multidimensional radio space over which the communication network extends. The method comprises receiving a report of radio resource measurements performed by a UE and assigning a current radio location of the UE to a radio zone of the communication network on the basis of the contents of the report. A radio zone comprises a region of the multidimensional radio space over which the communication network extends that is defined by a particular combination of radio field characteristics, and each cell of the communication network comprises a plurality of radio zones. The method further comprises updating, in a database, a trajectory of the UE through the radio space of the communication network with the radio zone to which the current radio location of the UE is assigned. The method further comprises using the updated trajectory to calculate a probability of Handover of the UE to neighbor cells of the current serving cell of the UE, and initiating a Conditional Handover procedure for Handover of the UE to neighbor cells for which the probability of Handover is above a first Handover threshold value.

According to another aspect of the present disclosure, there is provided a computer program product comprising a computer readable medium, the computer readable medium having computer readable code embodied therein, the computer readable code being configured such that, on execution by a suitable computer or processor, the computer or processor is caused to perform a method according to any one of the aspects or examples of the present disclosure.

According to another aspect of the present disclosure, there is provided a management node for managing Conditional Handover of a UE in a cellular communication network, wherein the communication network comprises a plurality of radio resources, each radio resource defining a dimension of a multidimensional radio space over which the communication network extends. The management node comprises processing circuitry configured to receive a report of radio resource measurements performed by a UE and assign a current radio location of the UE to a radio zone of the communication network on the basis of the contents of the report. A radio zone comprises a region of the multidimensional radio space over which the communication network extends that is defined by a particular combination of radio field characteristics, and each cell of the communication network comprises a plurality of radio zones. The processing circuitry is further configured to update, in a database, a trajectory of the UE through the radio space of the communication network with the radio zone to which the current radio location of the UE is assigned. The processing circuitry is further configured to use the updated trajectory to calculate a probability of Handover of the UE to neighbor cells of the current serving cell of the UE, and to initiate a Conditional Handover procedure for Handover of the UE to neighbor cells for which the probability of Handover is above a first Handover threshold value.

Examples of the present disclosure thus propose a method according to which automatic RRC configuration of Conditional Handovers may be facilitated. UE motion trajectories are determined with sub-cell resolution in the radio space, which is a multidimensional space of radio field strength (for example RSRP) values measured from the radio cells visible to the UE. The sub-cell level radio location of UEs may be determined from RRC measurement reports that are periodically reported by UEs to network management. Examples of the methods disclosed herein may use commonly occurring motion patterns of UEs, for example combined with Markov chain prediction techniques based on the statistics of UE motion, to estimate a probability of handover to different neighbor cells. This probability, and the updated trajectory information in the radio space, can be used to guide the initiation and configuration of Conditional Handover. In this manner, examples of the present disclosure can determine when to send RRC messages to UEs and when to allocate resources at potential target cells, to which UEs and potential target cells the relevant requests should be sent, and what handover conditions the RRC reconfiguration messages should contain.

### Brief Description of the Drawings

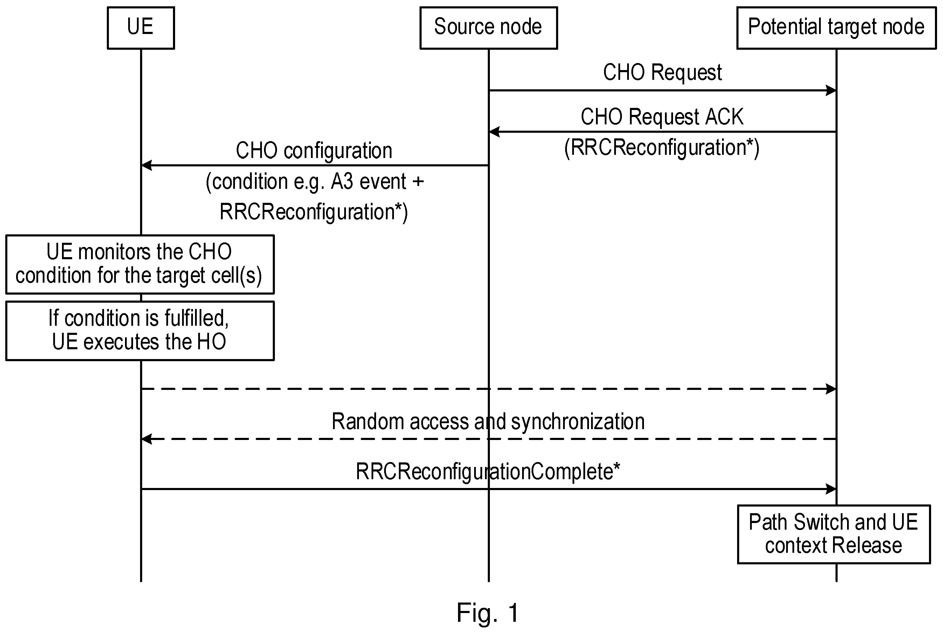

In the following, the embodiments of the invention are disclosed with specific reference to Figures 1-13. The other embodiments and/or examples of the disclosure are provided for illustrative purposes to support a better understanding of the invention.

For a better understanding of the present disclosure, and to show more clearly how it may be carried into effect, reference will now be made, by way of example, to the following drawings in which:
Figure 1 illustrates a message exchange for Conditional Handover of a UE;
Figure 2 is a flow chart illustrating process steps in a computer implemented method for managing Conditional Handover of a UE;
Figures 3A to 3E show a flow chart illustrating process steps in another example of a computer implemented method for managing Conditional Handover of a UE;
Figure 4 illustrates an overview of an automatic RRC configuration system;
Figure 5 illustrates an active UE periodically reporting field strength from its serving and neighbor cells;
Figure 6 illustrates the trajectory of the UE of Figure 5 in the radio space;
Figure 7 illustrates a compact description of a UE motion trajectory over radio zones in a multi-dimensional radio space;
Figure 8 is a real-network example showing distance traveled in the radio space for different UE trajectory segments;
Figure 9 shows the results of clustering performed on the UEs of Figure 8;
Figure 10 illustrates segmentation of trajectories and computation of segment statistics;
Figure 11 illustrates mobility prediction based on relative occurrences of trajectory segments;
Figure 12 illustrates a modified message exchange for Conditional Handover of a UE;
Figure 13 is a block diagram illustrating functional modules in an example management node;
Figure 14 is a block diagram illustrating functional modules in another example management node;
Figure 15 illustrates a wireless network in accordance with some examples;
Figure 16 illustrates a User Equipment in accordance with some examples;
Figure 17 illustrates a virtualization environment in accordance with some examples;
Figure 18 illustrates a telecommunication network connected via an intermediate network to a host computer in accordance with some examples;
Figure 19 illustrates a host computer communicating via a base station with a user equipment over a partially wireless connection in accordance with some examples;
Figure 20 illustrates methods implemented in a communication system including a host computer, a base station and a user equipment in accordance with some examples;
Figure 21 illustrates methods implemented in a communication system including a host computer, a base station and a user equipment in accordance with some examples;
Figure 22 illustrates methods implemented in a communication system including a host computer, a base station and a user equipment in accordance with some examples; and
Figure 23 illustrates methods implemented in a communication system including a host computer, a base station and a user equipment in accordance with some examples.

### Detailed Description

Examples of the present disclosure propose methods according to which the location of a UE in the radio space of a communication network may be established with sub-cell spatial resolution, for example on the basis of periodic neighbor cell Radio Resource Control (RRC) measurement reports of UEs. Such reports are already provided by UEs according to existing standardized operation. Examples of the methods disclosed herein may collect UE motion trajectories in the radio space in a compact and searchable format, making such trajectories available for further processing in real time. These trajectories may then be used to estimate a probability of handover to potential target cells, and therefore to identify suitable target cells for the Conditional Handover procedure. In some examples, the methods disclosed herein may comprise building a database of frequently occurring UE trajectories, so that the UE statistics over such trajectories may be used to predict UE motion in real-time.

According to some examples, the methods disclosed herein may enable the prediction of handover events, identifying potential target cell(s) of forthcoming handovers, so allowing for preparation of a Conditional Handover both at the UE and at the potential target cells. According to further examples, the preparation for a handover may be cancelled if the handover is no longer probable, for example owing to an unexpected change of UE trajectory. Some examples of the present disclosure may also distinguish between UEs that are slow and fast moving in terms of the rate of change of their radio environment, and may consequently customize handover parameters and other RRC procedures for individual UEs on the basis of this distinction.

In order to provide additional context for the methods of the present disclosure, there now follows a discussion of the Conditional Handover procedure proposed for 5^{th} Generation 3GPP cellular networks.

As discussed above, mobility mechanisms may involve frequent reconfigurations of UEs, in order to ensure that the transition of a connection from one cell to another is both smooth and robust. Conditional Handover (CHO) is a new mobility mechanism proposed for 5G cellular networks. In Conditional Handover, the network prepares both the UE in motion, and the cell to which the UE is heading, for a handover, so that the handover can be instantly performed on the fulfillment of the handover condition without exchanging further messages. Actions performed by the different actors according to Conditional Handover are illustrated in Figure 1.

The conditional handover mechanism consists of two phases. The first phase is the preparation phase, in which the network side decides on the possible handover based on the last measurement reports that the network received from the UE. The network then prepares the UE, as well as the source and target cells, for the handover. This involves the sending of a CHO Request to the potential target cell, and receipt of a corresponding acknowledgement, as well as the sending of CHO configuration to the UE. The CHO configuration provides the UE with the handover condition, which includes situation-specific parameters such as a handover margin and Time-to-Trigger (TTT). In the second phase of Conditional Handover, upon fulfillment of the handover condition, the handover is executed promptly by the UE, without the need for further instruction from the network, via the RRC ReconfigurationComplete message. If there is no chance for fulfillment of the handover condition, the intention is that the network should cancel the condition with an RRC reconfiguration message. Sometimes more than one target cell should be prepared for the potential arrival of the UE, and the network should invalidate the preparation in target cells for which handover to the cell becomes improbable.

Figure 1 illustrates that the flow of handshaking messages between the actors in CHO has been defined by 3GPP. However, the radio resource control layer of network management is required to fill in the content for these messages, determine their timing and identify suitable target network cells. Examples of the present disclosure enable management of the CHO process, and may facilitate the following tasks and decisions that may be executed by the network management:
- Based on recent UE RRC measurement reports and RRC measurement trigger events (for example as set out in 3GPP TS 36.331 V15.8.0), the network identifies UEs that should be instructed for extensive radio field survey and be configured with RRC measurement trigger conditions. These are the UEs which can anticipate a handover in the near future.
- The network prepares potential target cells, reserving resources for the identified UEs.
- The network sends RRC reconfigurations to identified UEs with RRC measurement and handover trigger conditions, which are specific to the potential target cells for the identified UEs. The network customizes the handover conditions, including for example handover margin and time to trigger, to each UE individually. This customization may ensure that UEs experiencing quickly and slowly changing radio environments are configured differently.
- The network identifies the UEs and situations in which handover to any target cell is no longer probable.
- The network sends RRC reconfiguration to such UEs to change RRC measurement reporting and/or to remove handover trigger conditions. The network also releases resources in target cells where the UE is no longer expected to handover.

The above tasks can be efficiently performed on the basis of a forecast of how the UE is expected to move in the radio environment. In a majority of situations, forecasting the radio environment for the next couple seconds to a minute will be sufficient. It is noted that, as discussed in further detail below, forecasting the radio environment of a UE is related to, but not equivalent to, predicting the future geographic position of a UE.

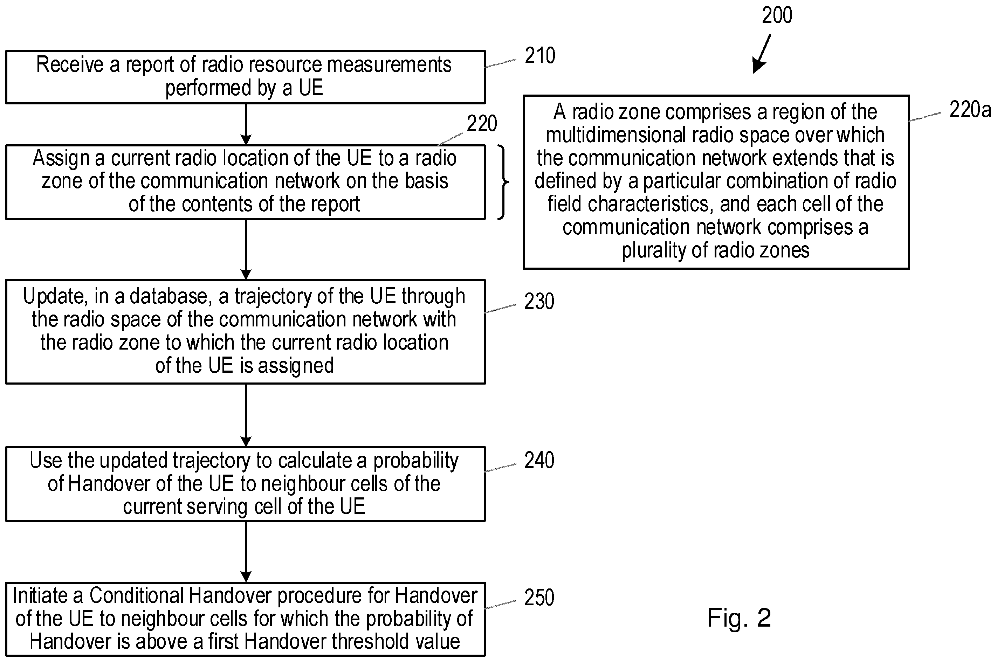

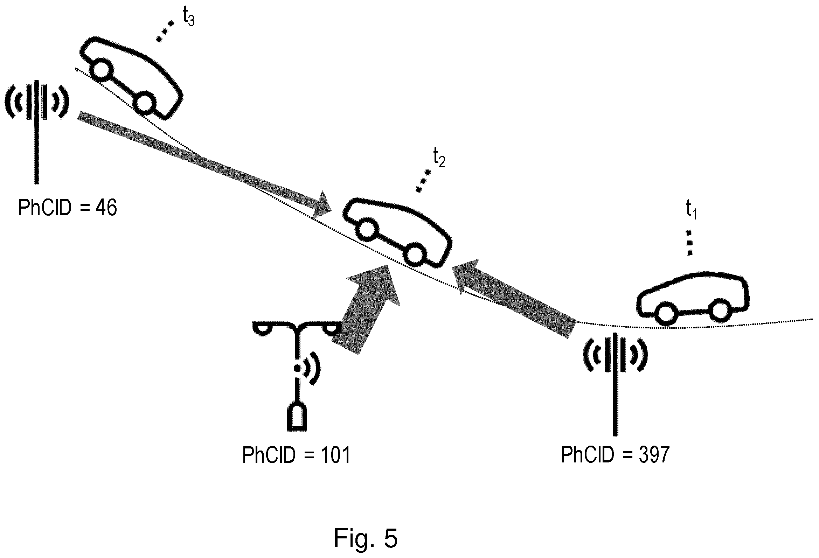

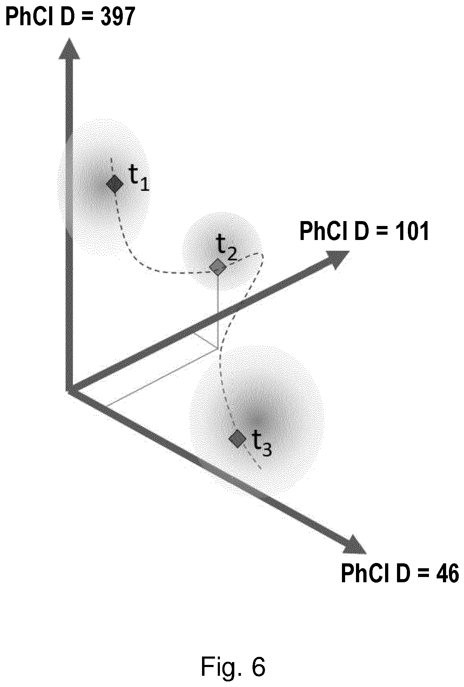

Figure 2 is a flow chart illustrating process steps in a computer implemented method 200 for managing Conditional Handover of a UE in a cellular communication network, wherein the communication network comprises a plurality of radio resources, each radio resource defining a dimension of a multidimensional radio space over which the communication network extends. The concept of a multidimensional radio space is discussed in greater detail below with reference to Figures 5 and 6.

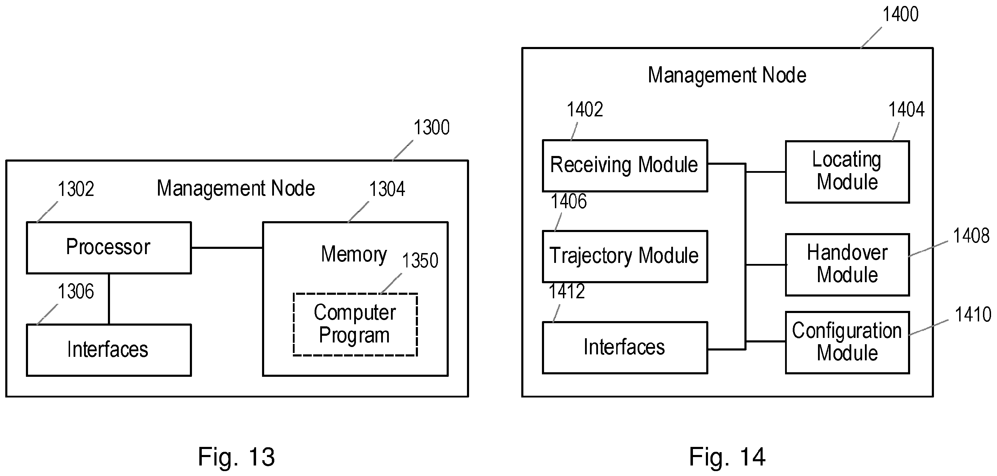

The method 200 is carried out by a management node, such as a Radio resource Control (RRC) management node, as discussed in further detail below with reference to Figures 13 and 14. Referring to Figure 2, the method 200 comprises, in a first step 210, receiving a report of radio resource measurements performed by a UE. In step 220, the method comprises assigning a current radio location of the UE to a radio zone of the communication network on the basis of the contents of the report. A radio zone comprises a region of the multidimensional radio space over which the communication network extends, which region is defined by a particular combination of radio field characteristics. Each cell of the communication network comprises a plurality of radio zones. It will be appreciated that the radio location of the UE refers to the location of the UE in the multidimensional radio space, as opposed to the physical or geographical location of the UE. While radio location may be correlated to physical location via a mapping between the multidimensional radio space and the physical environment, the two concepts are not equivalent.

In step 230, the method 200 comprises updating, in a database, a trajectory of the UE through the radio space of the communication network with the radio zone to which the current radio location of the UE is assigned. As for the radio location of the UE, the UE's trajectory through the radio space refers to its trajectory in the multidimensional radio space, as opposed to a geographical trajectory of the UE. The method 200 then comprises, in step 240, using the updated trajectory to calculate a probability of Handover of the UE to neighbor cells of the current serving cell of the UE. In step 250, the method comprises initiating a Conditional Handover procedure for Handover of the UE to neighbor cells for which the probability of Handover is above a first Handover threshold value. For the purposes of the present disclosure, it will be appreciated that a "Conditional Handover procedure" refers to a procedure conducted according to the Conditional Handover mobility mechanism proposed for 5G cellular networks. Such a procedure may be in accordance with current or future standardization for the Conditional handover mechanism. As such, a "Conditional Handover procedure" may refer to a procedure for preparation of the UE context in the neighbor cells for which the probability of Handover is above the first Handover threshold value, and/or reservation of resources for the UE in such neighbor cells.

Embodiments of the method 200 thus enable the real-time management of a Conditional Handover process. By updating a UE trajectory through a multidimensional radio space, and through the use of radio zones to provide a sub-cell granularity for the UE location in the radio space, a probability of the UE requiring a Handover to neighbor cells can be generated. Conditional Handover may therefore be initiated towards those target cells for which the generated probability is over a threshold value. In this manner, the relatively resource intensive Conditional Handover process is only directed towards those potential target cells for which handover is a probability, as defined by the level of the first Handover threshold for handover probability. It will be appreciated that according to different examples of the present disclosure, the method steps may be repeated at each reporting interval for a UE, the management node receiving and processing a new report of measurements at each reporting period. It will further be appreciated that the method 100 may be performed concurrently for a plurality of UEs accessing the communication network, the method running concurrently for all UEs in real time.

For the purposes of the present disclosure, the term User Equipment (UE) refers to any wireless device (WD) that is capable, configured, arranged and/or operable to communicate wirelessly with network nodes and/or other wireless devices. Communicating wirelessly may involve transmitting and/or receiving wireless signals using electromagnetic waves, radio waves, infrared waves, and/or other types of signals suitable for conveying information through air. In some embodiments, a UE may be configured to transmit and/or receive information without direct human interaction. For instance, a UE may be designed to transmit information to a network on a predetermined schedule, when triggered by an internal or external event, or in response to requests from the network. Examples of a UE include, but are not limited to, a smart phone, a mobile phone, a cell phone, a voice over IP (VoIP) phone, a wireless local loop phone, a desktop computer, a personal digital assistant (PDA), a wireless cameras, a gaming console or device, a music storage device, a playback appliance, a wearable terminal device, a wireless endpoint, a mobile station, a tablet, a laptop, a laptop-embedded equipment (LEE), a laptop-mounted equipment (LME), a smart device, a wireless customer-premise equipment (CPE), a vehicle-mounted wireless terminal device, etc. A UE may support device-to-device (D2D) communication, for example by implementing a 3GPP standard for sidelink communication, vehicle-to-vehicle (V2V), vehicle-to-infrastructure (V2I), vehicle-to-everything (V2X) and may in this case be referred to as a D2D communication device. As yet another specific example, in an Internet of Things (IoT) scenario, a UE may represent a machine or other device that performs monitoring and/or measurements, and transmits the results of such monitoring and/or measurements to another UE and/or a network node. The UE may in this case be a machine-to-machine (M2M) device, which may in a 3GPP context be referred to as an MTC device. As one particular example, the UE may be a UE implementing the 3GPP narrow band internet of things (NB-IoT) standard. Particular examples of such machines or devices are sensors, metering devices such as power meters, industrial machinery, or home or personal appliances (e.g. refrigerators, televisions, etc.) personal wearables (e.g., watches, fitness trackers, etc.). In other scenarios, a UE may represent a vehicle or other equipment that is capable of monitoring and/or reporting on its operational status or other functions associated with its operation. A UE as described above may represent the endpoint of a wireless connection, in which case the device may be referred to as a wireless terminal. Furthermore, a UE as described above may be mobile, in which case it may also be referred to as a mobile device or a mobile terminal.

For the purposes of the present disclosure, a "cell" refers to the geographic coverage area served by a Radio Access node of a communication network, and may also be used interchangeably to refer to the Radio Access node that serves the coverage area. A Radio Access node may comprise a physical node and/or a virtualized network function operable to exchange wireless signals. In some examples, a Radio Access node may comprise a base station node such as a NodeB, eNodeB, gNodeB, or any future implementation of the above discussed functionality. Additional discussion of a wireless network, network nodes, UEs, etc. is provided at the end of the present description.

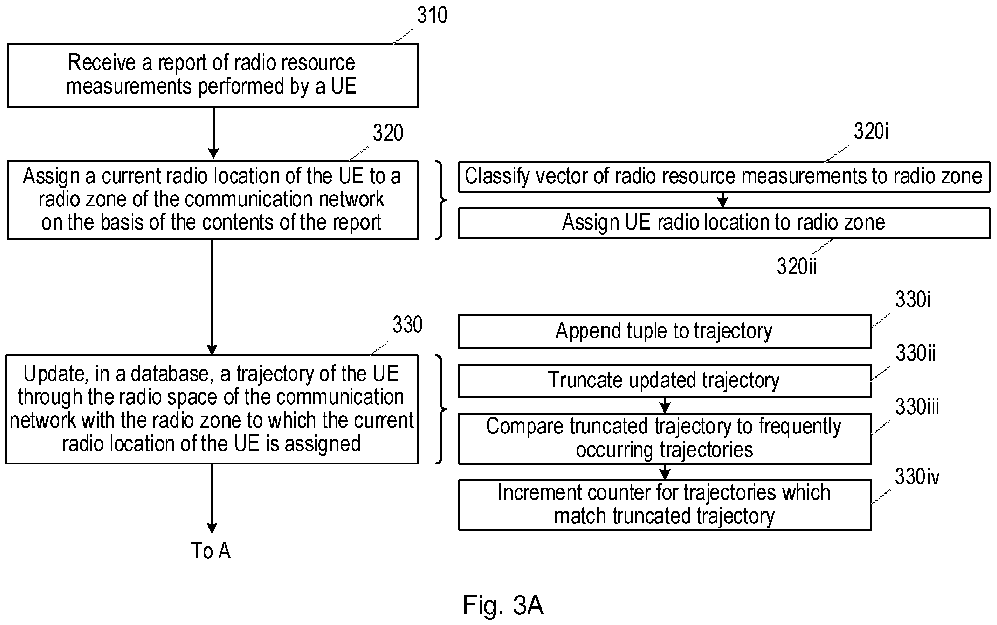

Figures 3A to 3E show a flow chart illustrating process steps in another computer implemented method 300 for managing Conditional Handover of a UE in a cellular communication network, wherein the communication network comprises a plurality of radio resources, each radio resource defining a dimension of a multidimensional radio space over which the communication network extends. As for the method 200 discussed above, the method 300 is carried out by a management node, such as a Radio resource Control (RRC) management node. The method 300 provides one embodiment of how the steps of the method 200 may be implemented and supplemented to achieve the above discussed and additional functionality.

Referring first to Figure 3A, the method 300 comprises, in a first step 310, receiving a report of radio resource measurements performed by a UE. The report may for example be an RRC Measurement Report sent by the UE to its serving cell and forwarded by the serving cell to a management node carrying out the method 300. The report of radio resource measurements may comprise for example Reference Signal Received Power (RSRP) measurements for Reference Signals detected from the serving cell and from neighbor cells that the UE is able to detect. The RSRP measurements may identify the originating cell by a Physical Cell Identifier.

In step 320, the method 300 comprises assigning a current radio location of the UE to a radio zone of the communication network on the basis of the contents of the report, wherein a radio zone comprises a region of the multidimensional radio space over which the communication network extends, which region is defined by a particular combination of radio field characteristics. Each cell of the communication network comprises a plurality of radio zones. Radio zones are discussed in greater detail below with reference to Figures 5 and 6. As illustrated in Figure 3A, the process of assigning a current radio location of the UE to a radio zone of the communication network may comprise, at step 320i, classifying a vector of radio resource measurements contained in the report into a radio zone, and at step 320ii, assigning a current radio location of the UE to the radio zone into which the vector is classified. Any suitable classification algorithm may be used to classify the vector of radio resource measurements to a radio zone. For example, a radio zone may be defined by a measurement envelope around a vector of measurements that represent the radio field environment which is characteristic of the radio zone. A classification algorithm may compare the vector of measurements from the measurement report to the characteristic vector of measurements and measurement envelopes for a plurality of radio zones, until the radio location of the UE sending the measurement report is assigned to the radio zone to which the vector of measurements corresponds the most closely. Examples of suitable classification algorithms may include a Self-Organizing Map (SOM), K-Nearest Neighbors, Naïve Bayes, and Support Vector Machine.

In step 330, the method 300 comprises updating, in a database, a trajectory of the UE through the radio space of the communication network with the radio zone to which the current radio location of the UE is assigned. In one example, this may comprise, as illustrated at 330i, appending to a record of the UE's trajectory a tuple of time stamp, radio zone identifier of the radio zone to which the UE's location has been assigned, and transition identifier for a transition from the previous radio zone of the trajectory. The time stamp may be the time stamp associated with the measurement report. The radio zone identifier may be any suitable identifier for distinguishing one radio zone from another. The transition identifier may distinguish different types of transition by which a UE may arrive at a radio zone during a trajectory, including:
"no transition" if a UE is substantially stationary, and consequently does not change radio zones between measurement reports;
"basic - zone transition without RRC event" if a UE has changed radio zones since the last measurement report, and consequently the last entry in the trajectory, but this change was not associated with a Radio Link Failure, handover or other Radio Resource Control event;
"zone transition with intra frequency handover" if a UE has changed serving cell but remains on the same frequency;
"zone transition with inter frequency handover" if the UE has changed serving cell and changed frequency; "zone transition with RAT change" if a UE has both changed serving cell and changed Radio Access Technology.

Other types of transition between radio zones may also be envisaged.

According to further examples of the present disclosure, the step 330 of updating, in a database, a trajectory of the UE through the radio space of the communication network with the radio zone to which the UE is assigned may further comprise, in step 330ii, truncating the updated trajectory over a sliding window, for example such that only a threshold number of most recent entries are retained, or only entries over a preceding time period are retained. Updating the trajectory may further comprise comparing the truncated trajectory to each of a candidate set of frequently occurring trajectories in step 330iii, and, for any trajectory of the candidate set of frequently occurring trajectories for which the truncated trajectory is a match, incrementing a frequency counter of the trajectory in step 330iv. In this manner, an incidence counter for frequent trajectories may be maintained. A match between a trajectory of the candidate set and the truncated trajectory means that each entry of the truncated trajectory is identical to that of the trajectory of the candidate set, and that the entries consequently appear in the same order in the truncated trajectory and the trajectory of the candidate set. The candidate set of frequently occurring trajectories may be populated in any suitable manner, for example comprising a threshold number of most popular trajectories over a particular time period. The time period may for example comprise a rolling time window, such that the candidate set comprises the threshold number of most popular trajectories over the preceding minutes, hours, days or weeks, etc. The candidate set of frequently occurring trajectories may contain only those trajectories that have been recorded while the network configuration was substantially stable. For example addition of new Radio Access nodes, or other configuration changes in the network, may result in the population of a new candidate set of frequent trajectories, recorded under the new network configuration.

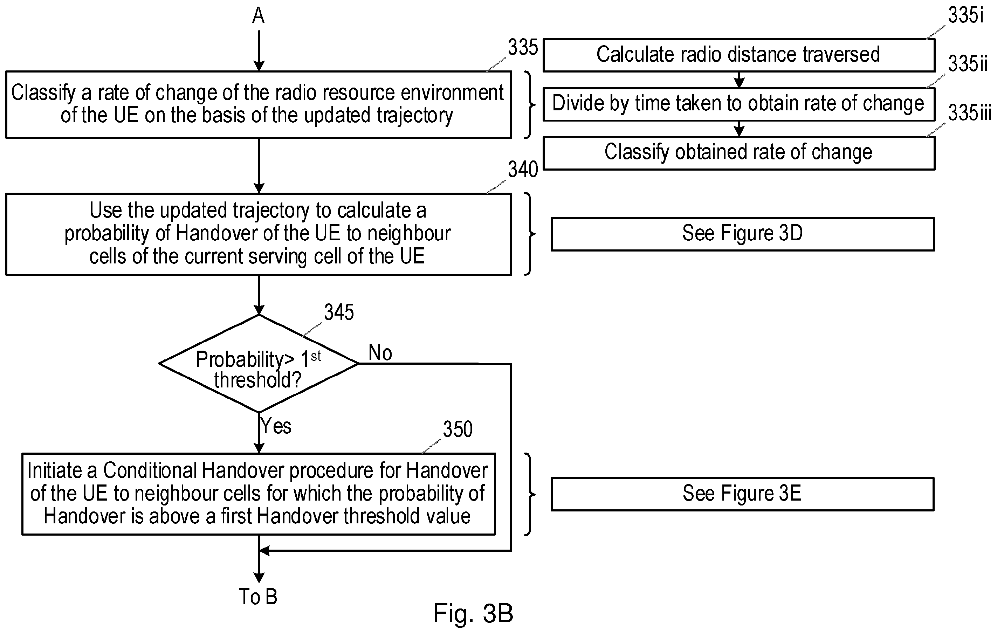

Referring now to Figure 3B, in step 335, the method 300 may comprise classifying a rate of change of the radio resource environment of the UE on the basis of the updated trajectory. It will be appreciated that the rate of change of the radio resource environment of the UE may be related to the physical speed at which the UE may be moving, but is not directly equivalent to the UE's physical speed. The extent to which the radio resource environment will change with physical distance travelled will vary according to the nature of the radio resource environment. In a densely populated urban area, with multiple heterogeneous base stations serving overlapping macro, micro, pico and femto cells, a small change in physical location may result in a significant change in radio resource environment. Conversely, in a highly rural area, many square kilometers may be served by a single macro cell, meaning that considerable physical distance would need to be travelled for a UE to experience any significant change in radio resource environment.

As illustrated in Figure 3B, the step of classifying a rate of change of the radio resource environment of the UE on the basis of the updated trajectory may comprise, in step 335i, calculating a distance traversed by the UE over the multidimensional radio space on the basis of the radio zones present in the UE's updated trajectory over a sliding window. It will be appreciated that the "distance" referred to in step 335i is the distance in the radio space, where each radio resource defines a dimension, and not the physical distance. In step 335ii, classifying rate of change may comprise dividing the calculated distance in the radio space by a time during which the calculated distance was traversed by the UE, in order to obtain a rate of change of the radio resource environment of the UE. Finally in step 335iii, the obtained rate of change may classified into one of a plurality of classifications. The classifications may equate to relatively "fast" and "slow" rates of change, corresponding to rates above and below a threshold value, or a finer granularity may be employed, using a plurality of classes of rate of change.

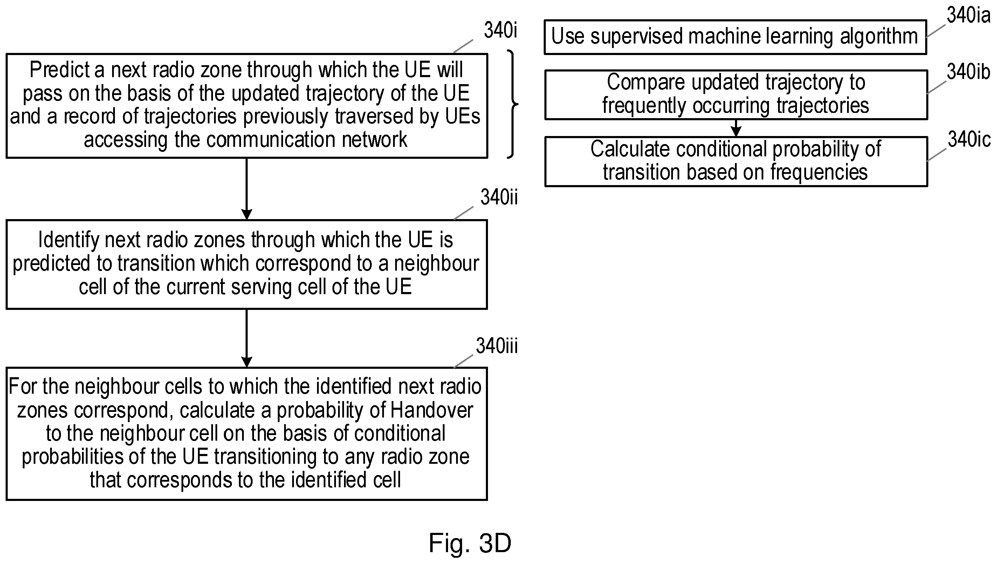

In step 340, the method 300 comprises using the updated trajectory to calculate a probability of Handover of the UE to neighbor cells of the current serving cell of the UE. Detail of how this step may be implemented is illustrated in Figure 3D. Referring now to Figure 3D, in a first step 340i, using the updated trajectory to calculate a Handover probability may comprise predicting a next radio zone through which the UE will pass on the basis of the updated trajectory of the UE and a record of trajectories previously traversed by UEs accessing the communication network. This prediction may be accomplished by, in step 340ia, using a supervised machine learning algorithm to predict the next radio zone on the basis of the updated trajectory and the record of previous trajectories. The supervised machine learning algorithm may be trained using data of trajectories followed in the past by UEs connected to the network, resulting in a trained prediction model that can take the updated trajectory of the UE as input, and output a predicted next radio zone for the UE. It will be appreciated that a wealth of training data may be available, including historical UE trajectories over a suitable time period. In some examples, training data may be assembled from trajectories that have taken place during a time period in which the network configuration can be considered as unchanged from the current configuration at the time at which the method is being carried out. In further examples, training data may be assembled using only the most frequently followed trajectories, or other selection criteria for assembling a training data set may be applied. A prediction model may be trained using any suitable supervised learning technique. In one example, a Random Forrest algorithm may be used for prediction of next radio zone. In some examples, prediction techniques may be used that take into account additional factors such as likely stability of a UE within a cell. For example, an Artificial Neural Network may be used to evaluate the reliability of cells associated with possible next radio zones, and this reliability may be taken into account in the prediction of next radio zone, and/or in a subsequent prediction of next cell. In some examples, the next two or more predicted radio zones may be used to assess reliability, so as to identify for example a predicted trajectory over a coming time interval that corresponds to a risk of short jump, or "ping-pong" handover, as discussed in further detail below. In still further examples, prediction of next radio zone may be combined with prediction of next cell, such that a prediction model is trained to generate a predicted next cell, or prediction of handover, from an input comprising an updated UE trajectory.

In further examples, the prediction of next radio zone in step 340 may be accomplished using a Markov chain model. This may be achieved by, in step 340ib, comparing the updated trajectory of the UE to each of a candidate set of frequently occurring trajectories over a sliding window, and, in step 340ib, for each trajectory of the candidate set of frequently occurring trajectories for which the updated trajectory is a match, calculating a conditional probability of the UE transitioning to the next radio zone in the matched trajectory of the candidate set on the basis of a frequency with which UEs accessing the network have followed that matched trajectory. As discussed above, a match between a trajectory of the candidate set and the updated trajectory means that each entry of the updated trajectory is identical to that of the trajectory of the candidate set, and that the entries consequently appear in the same order in the updated trajectory and the trajectory of the candidate set.

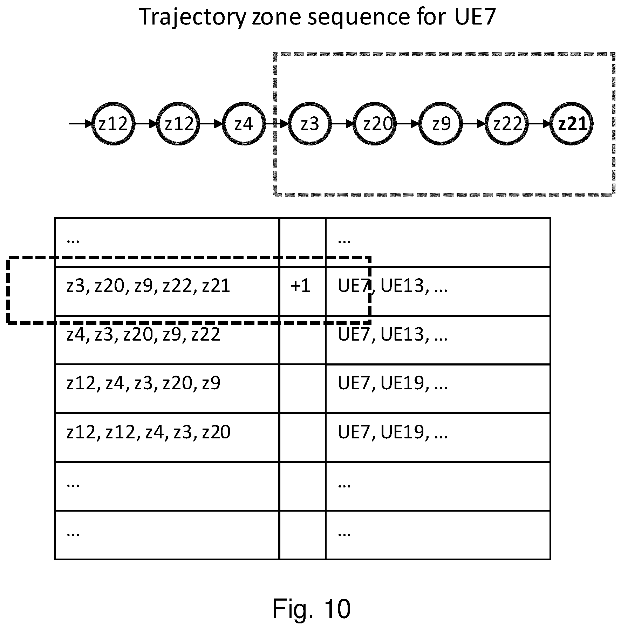

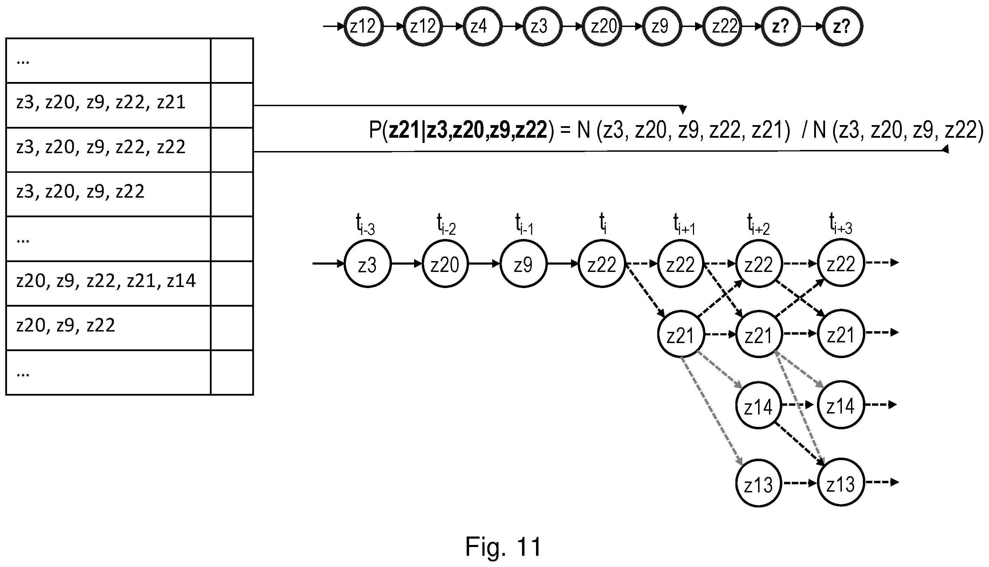

Radio zones having a conditional probability above a zone threshold value may be considered to be radio zones through which the UE is predicted to pass. In some examples, conditional probabilities for the next two or more radio zones of the trajectory may be calculated, again on the basis of a frequency with which UEs accessing the network have followed trajectories matching that of the UE and comprising the respective next radio zones. This process of conditional probability calculation is discussed in detail below with reference to Figures 10 and 11. The candidate set of frequently occurring trajectories may be the same candidate set as was used for comparison and incrementing of trajectory counters in steps 330iii and 330iv. As discussed above, the trajectories for comparison may all have taken place during a period in which the network configuration can be considered as unchanged from the current configuration at the time at which the method is being carried out.

In step 340ii, using the updated trajectory to calculate a Handover probability may further comprise identifying next radio zones through which the UE is predicted to transition which correspond to a neighbor cell of the current serving cell of the UE. As each cell of the communication network comprises a plurality of radio zones, not every radio zone transition will correspond to a handover operation. In step 340iii, for the neighbor cells to which the identified next radio zones correspond, a probability of Handover to the neighbor cell may be calculated on the basis of conditional probabilities of the UE transitioning to any radio zone that corresponds to the identified cell. As discussed below in greater detail, radio zones may be established by clustering using a similarity metric, such that if handover occurs with a particular transition between radio zones, then there is a high probability that any such radio zone transition will be accompanied by a cell handover. If, however, only a proportion of the occurrences of a particular radio zone transition coincide with a cell handover, then this proportion may be included as an additional conditional probability, or probability multiplier, in calculating the probability of cell handover. As discussed above with reference to step 340ia, other prediction techniques, including models trained using supervised learning algorithms, may be used to predict next radio zones, and such models may be trained to predict directly the probability of cell handover, taking account of factors including correlation between particular radio zone transitions and cell handovers.

Referring again to Figure 3B, in step 345, the method comprises checking whether a probability of Handover to any neighbor cell, as calculated in step 340 is above a first Handover threshold value. This first Handover threshold value may be set according to network priorities, a Quality of Service (QoS) requirement for the UE, availability of network resources etc. The first Handover threshold effectively sets the balance between the resource cost of implementing Conditional Handover, particularly for the potential target cells that will reserve resources for the UE, and the benefit of ensuring smooth and robust handover for the UE. If no neighbor cells have a calculated probability of handover that is above the first Handover threshold, then the method proceeds to step 360, as discussed below. If at least one neighbor cell has a calculated probability of handover that is above the first Handover threshold, then the method proceeds to step 350.

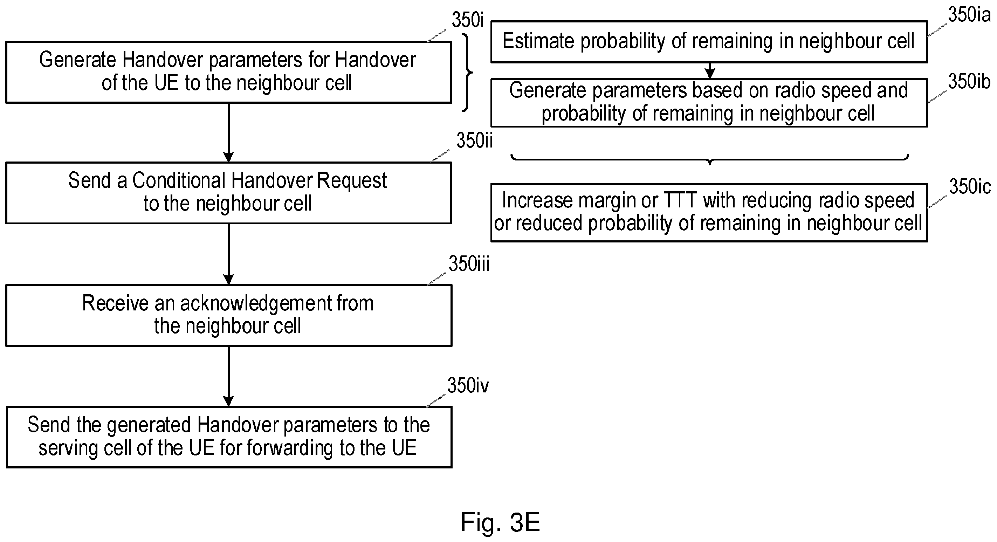

In step 350, the method 300 comprises initiating a Conditional Handover procedure for handover of the UE to the neighbor cell or cells for which the probability of handover is above the first Handover threshold value. The steps that may be involved in carrying out this initiation are illustrated in Figure 3E.

Referring to Figure 3E, in step 350i, initiating Conditional Handover may comprise, for a neighbor cell for which the probability of handover is above the first Handover threshold value, generating handover parameters for handover of the UE to the neighbor cell in step 350i, sending a Conditional Handover Request to the neighbor cell in step 350ii, receiving an acknowledgement from the neighbor cell in step 350iii, and sending the generated handover parameters from step 350i to the serving cell of the UE for forwarding to the UE. Generating handover parameters is discussed in greater detail below. The step 350ii of sending a Conditional Handover Request to the neighbor cell may for example comprise reserving resources in the neighbor cell for the UE, for example by requesting the neighbor cell to prepare a UE context.

The process of generating Handover parameters for the Handover of the UE to the neighbor cell in step 350i may involve tailoring the parameters both to the specific UE and to the neighbor cell concerned. In one example, in step 350ia, the method may comprise estimating a probability that the UE will remain in the neighbor cell for a threshold sojourn time, so providing an indication of the stability of the UE in the new cell. The method may then comprise generating at least one of a Handover margin or a Handover Time-to-Trigger on the basis of at least one of the estimated probability and/or a measure of a rate of change of the radio resource environment of the UE, which may for example be the classification prepared at step 335. As illustrated at 350ic, generating the Handover parameters may comprise increasing a Handover margin or a Handover Time-to-Trigger with at least one of reducing rate of change of radio resource environment and/or reducing probability that the UE will remain in the neighbor cell for a threshold sojourn time. The adjustment of Handover parameters on the basis of projected stability of the UE in the new cell and/or rate of change of radio environment for the UE, may assist in avoiding so called "ping pong" handovers, in which a UE is handed over to a target cell only to be rapidly handed back to the original cell, placing additional strain on the network. By increasing the Handover margin and/or Time-to-Trigger for UEs at risk of a ping-pong Handover (UEs for which the radio environment is changing rapidly, or at risk of quickly leaving the target cell), the occurrence of such situations can be minimized. Different combinations of Handover margin and Time-to-Trigger may be envisaged for differing situations, and four example scenarios are presented below:
1) For a fast UE (experiencing a rapid change of radio resource environment), and sure target cell (high probability that the UE will remain in the target neighbor cell for a threshold sojourn time), a relatively low Hanover margin and short Time-to-Trigger (TTT) may be set, as it is preferable for handover to happen quickly.
2) For a fast UE and unreliable target cell (low probability that the UE will remain in the target neighbor cell for a threshold sojourn time), a relatively low Handover margin and long TTT may be set, in order to reduce the risk of ping-pong handover.
3) For a slow UE (experiencing a slow change of radio resource environment) and sure target cell, a relatively high Handover margin and long TTT may be set, as handover is not urgent.
4) For a slow UE and unreliable target cell, a relatively high Handover margin and long TTT may be set, as it is preferable to avoid ping-pong handover and the current connection is not at risk (owing to the slow change in radio resource environment experienced by the UE).

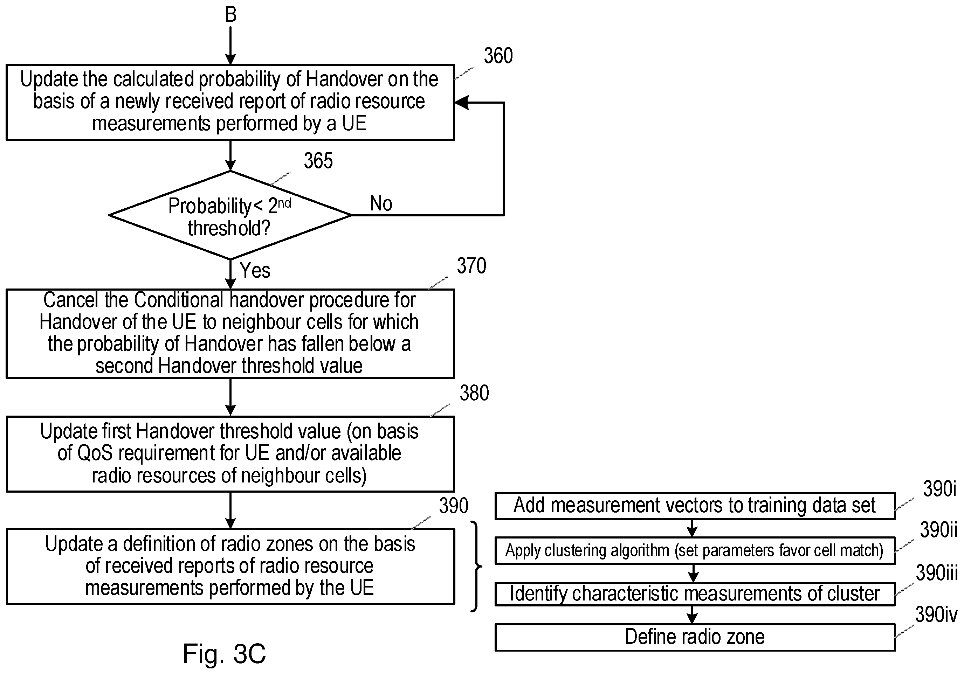

Referring now to Figure 3C, in step 360, the method 300 comprises, following initiation of conditional handover in step 350, updating, in step 360, the calculated probability of Handover of the UE to neighbor cells of the current serving cell of the UE on the basis of a newly received report of radio resource measurements performed by a UE. This may for example comprise repeating steps 310 to 340 of the method on the basis of a newly received report of measurements performed by the UE, allowing for any newly identified potential target cells to be prepared for Conditional Handover. If, at step 365, the probability of handover for all neighbor cells for which Conditional Handover has been initiated remains at or above a second Handover threshold value, then the method 300 returns to step 360, updating the probabilities again on the basis of a newly received report of measurements. This process may continue until handover is executed by the UE on fulfilment of the Handover conditions (Handover margin and Time-to-Trigger). If, however, at step 365 it is determined that the probability of handover for a neighbor cell for which Conditional Handover has been initiated has fallen below a second Handover threshold value, then the method 300 comprises, at step 370, cancelling the Conditional handover procedure for Handover to that cell. Probability of handover may fall for example if a UE takes an unexpected trajectory, and cancellation of the Conditional Handover procedure may be achieved by sending additional RRC reconfiguration messages instructing the target cell to release the resources reserved for the UE, and cancelling the handover parameters relating to the relevant target cell in the UE. Messages to the UE may be forwarded to the UE via the current serving cell of the UE. The second Handover threshold value may be set according to network priorities, and may in some examples be the same as the first Handover threshold value.

In step 380, the method 300 comprises updating the first Handover threshold value according to at least one of a Quality of Service requirement for the UE and/or availability of radio resources in neighbor cells of the current serving cell. The method 300 further comprises, at step 390, updating a definition of radio zones on the basis of received reports of radio resource measurements performed by the UE. The updating at step 390 may in some examples be performed using radio measurements received from a plurality of UEs, and for example from all UEs in the network. Updating of radio zone definitions may be periodic, or may alternatively or additionally be triggered following changes to the radio network environment, such as installation of a new base station, reconfiguring of certain network parameters, etc. Updating of radio zone definitions may comprise adding vectors of measurements contained in received reports to a training data set in step 390i, and applying a clustering algorithm to the training data set in step 390ii. Updating of radio zones may further comprise, for clusters identified by the clustering algorithm, identifying a set of measurements that represent the radio field characteristics of the cluster in step 390iii, and defining a measurement envelope centered on the identified set of measurements as a radio zone in step 390iv. Applying a clustering algorithm in step 390ii may comprise setting, as a clustering parameter, a physical cell identity, so as to reduce the probability that a radio zone will span multiple cells, and consequently increase the probability that a Handover between cells will be accompanied by a transition between radio zones. It will be appreciated that, particularly in the case of multiple carriers, ensuring that radio zones do extend across cell borders at all carriers and all times may be extremely difficult. The present disclosure does not propose attempting to ensure such absolute coordination between radio zones and cell boundaries. However, influencing clustering in the direction of avoiding radio zones spanning multiple cell coverage areas may assist with handover prediction. Examples of clustering algorithms that may be used to establish and/or update radio zones may include a Self-Organizing Map (SOM), Generative topographic map, K-medoid and Affinity propagation.

As discussed above with reference to Figure 2, the method 300 may run substantially concurrently for a plurality of UEs, and in some examples for all UEs accessing a communication network.

Figures 2 to 3E discussed above provide an overview of methods which may be performed according to different examples of the present disclosure. The methods involve the tracking of a trajectory of a UE through a multidimensional radio space over which a communication network extends, in order to use the trajectory to calculate a probability of Handover to neighbor cells, and initiate Conditional handover with neighbor cells accordingly. There now follows a detailed discussion of how different process steps illustrated in Figures 2 to 3E and discussed above may be implemented, using an example system and message flow according to the present disclosure.

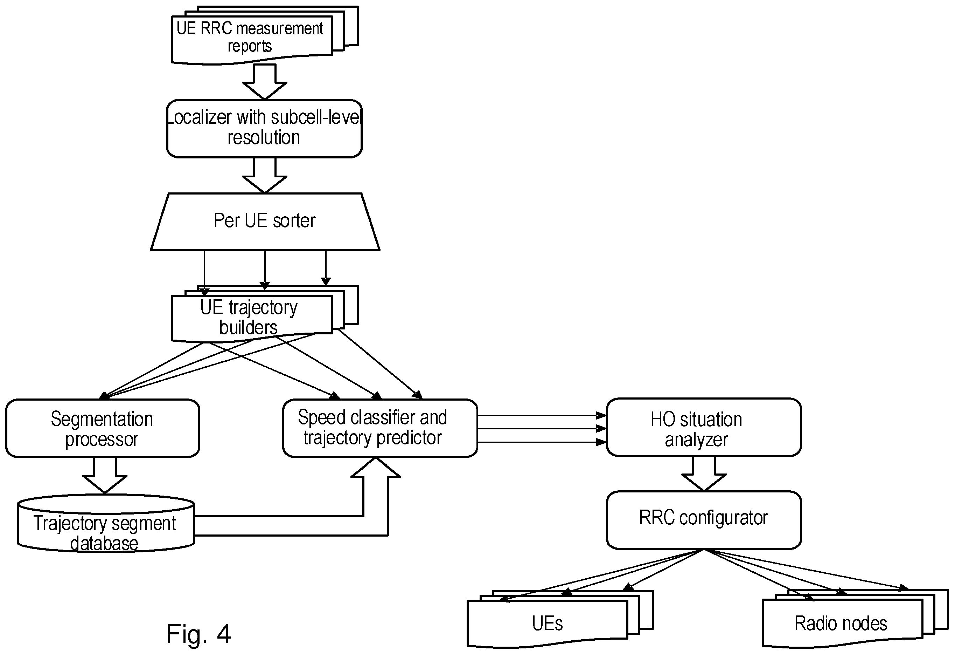

Figure 4 illustrates an overview of an automatic RRC configuration system 400, elements of which may implement the methods disclosed herein. The system comprises a localiser 402 with sub-cell resolution, a per-UE sorter 404, and a plurality of UE trajectory builders 406. The system further comprises a segmentation processor 408, trajectory segmented database 410, and speed classifier and trajectory predictor 412. The system further comprises a Handover situation analyser 414, and an RRC configuration module 416. Each of the elements of the system 400 comprises a logical element, which may be a physical element such as a server, a virtual element, such as a logical function or virtual machine, or may comprise a combination of physical and virtual components. In one example the system 400 may be substantially instantiated in the edge cloud, so as to minimise data transmission. In a further example, some or all elements of the system 400 may be instantiated within a logical "management node" that may perform examples of the method 200 and/or 300. An overview of the operation of system 400 is presented below, followed by detailed discussion of implementation of individual method steps introduced above with reference to Figures 2 and 3A to 3E, and which may be implemented by different elements of the system 400.

Referring to Figure 4, UE RRC measurement reports 401 are the input to the system 400. The base stations serving the respective UEs may forward the measurement reports 401 to network management (in the present example to the system 400) in the form of aggregated data flows. The thick arrows in the upper portion of Figure 4 indicate that the information flows represented include information for multiple UEs. The localizer 402 in the system 400 determines a radio zone for each RRC measurement report, typically with much better spatial resolution than is possible with just cell association. The information flows for the different UEs are then separated in the per-UE sorter 404, so that so a motion trajectory over the radio zones for each active UE can be drawn. As discussed above, the trajectories may serve two principal purposes: the trajectories may be segmented in the segmentation processor 408, and a database 410 of trajectory segments built for trajectory prediction, and the trajectories may be used for classifying UE speed through the radio environment in the speed classifier 412, assisting with prediction of near-time continuation of UE motion. The handover (HO) situation analyzer 414 determines if a handover is probable to any neighbor within a near time threshold, and then the RRC configuration module 414 initiates Conditional Handover, preparing the relevant UEs and target cells for handover and automatically customizing the handover conditions for individual UEs and target cells.

The following discussion covers in greater detail the definition of a radio environment, comprising a multidimensional radio space of field strength values, with dimensions corresponding to radio resources such as neighbor cells and beams using various Radio Access Technologies (RATs) and carriers. Also discussed are the division of the radio environment into radio zones, description of the motion of UEs along these zones in a compact and searchable way, preparation of short-time motion predictions for a UE based on comparing the UE latest trajectory with historical trajectories of other UEs that have moved along the same trajectory, and establishing the timing and information content of RRC reconfiguration messages that the network may send to UEs.

### UE localization in radio space

Step 320 of the method 300 involves assigning a current location of a UE to a radio zone on the basis of a measurement report, and may be performed by the localizer 402.

Periodic RRC messages are reported by UEs to their serving cells, and forwarded to the management node, for example to the localizer 402 of the system 400. These reports include the neighbor- and serving-cell RSRP measurements, with the cells identified by physical cell IDs. Figure 5 illustrates an active UE periodically reporting field strength from its serving and neighbor cells, consistent with currently standardized operation in a 3GPP or other network. Reported information may be stored in a tabular form as illustrated in Table 1.

**Table 1: An example of a UE RRC measurement report on detected cells from the UE of Figure 5 at time t₂.**

| **RRC Measurement Report @ t₂** | **PhCID** | **Reported value RSRP+140dBm** |
|---|---|---|
| Serving Cell | 101 | 45 |
| Neighbor Cell | 397 | 37 |
| Neighbor Cell | 46 | 25 |

In LTE for example, the radio space on a single frequency carrier is defined along 504 dimensions, each dimension corresponding to the RSRP from a cell identified by a physical cell ID. Up to 504 different physical cell IDs are possible in LTE, resulting in the 504 dimensions of the radio-space spanned by a single frequency carrier of a 4G network. The physical cell IDs are reused by other cells beyond a certain distance, but they can be considered unique over a coverage area of a few dozen cells (around 70 cells for example). A UE reports the maximum 8 strongest neighbor cells, but it typically detects fewer than 8 cells and thus reports 1, 2, or 3 neighbors, as illustrated in the report information in Table 1. The RSRP value from a cell is offset to -140 dBm and the reported value falls in the range [0, 97] dB. Values from the non-visible cells can be set to 0. So, if the location in the radio space is given by the 504-element RSRP vector with element values in the range [0, 97], then a very sparsely filled 504-dimension space is obtained. Most of the measurement samples, that is the non-zero RSRP vectors, are along the axes and along hypersurfaces spanned by a relatively small number of axes.

It may be assumed that a UE moves along a path which runs through the coverage area of various communication network cells, as illustrated in Figure 5. The UE might detect one or more cells as it travels along its path, and if the UE is configured to report its measurements periodically, for example with a periodicity of 10s, then the reported measurements can be represented in a multi-dimensional space, where each dimension corresponds to one of the possible visible cells in the neighborhood. The RSRP value from a cell may be plotted along the axis corresponding to the radio resource of that cell. Figure 6 shows the trajectory of the UE of Figure 5 in the radio space, the trajectory advancing along the RSRP values from the nearby cells that are visible to UE. It will be appreciated that cells are identified by their physical cell IDs, and, as discussed above, 504 physical cell IDs are possible in an LTE network. Figure 6 illustrates a very limited example with only three dimensions, but in a practical scenario, the dimensions may be numbered in the thousands for a multi-carrier network, even if the UE tracking area is limited to a handful of urban residential blocks.

A finite number of radio zones in the radio space may be established, based on a training set of neighbor cell RSRP measurements. Newly received measurements may then be classified to their closest zone, as in step 320i. Various clustering techniques can be used to establish the zones, including for example a Self-Organizing Map (SOM). In one example, the clustering parameters can be set so that 5-10 clusters, or radio zones, are obtained per cell. Trials have indicated 5-10 radio zones per cell to provide a suitable level of accuracy. If the number of radio zones is too high, then the natural randomness of RSRP measurements will influence classification, and if the number of zones is too low, then sub-cell resolution is lost. The tradeoff depends on the local radio deployment, and will consequently be different for macro-, micro- and mixedcell deployments. Clustering parameters may also be selected to prioritize physical cell ID, so as to reduce the probability that a radio zone spans the coverage area of two cells, and consequently increase the probability that a change of serving cell will be associated with a change of radio zone.

It is advantageous to use a clustering technique which returns an RSRP measurement vector for each radio zone. Such a vector could be a center of the RSRP measurement vectors which constitute the zone, so representing the characteristic radio environment of measurements associated with the radio zone.

Measurements may then be converted to a regular vector as depicted in Table 2. The vector represents the measurements in the multidimensional radio space, as illustrated in Figure 6. In Table 2, the physical cell IDs are column indices, and the corresponding RSRP values comprise the rows. The values are offset by 140 dB according to current 3GPP reporting procedures, and 0 dB is inserted into columns which correspond to non-detected cells.

**Table 2: Vector representation of collected RRC measurements.**

| **PhCID** | **1** | **...** | **45** | **46** | **...** | **...** | **101** | **...** | | **397** | **...** | **504** |
|---|---|---|---|---|---|---|---|---|---|---|---|---|
| Reported value | 0 | ... | 0 | 25 | ... | ... | 45 | ... | | 37 | ... | 15 |

A table containing a large number of RSRP measurements, received from many UEs over time, may constitute the training set that is input to a self-organizing map (SOM) or other clustering technique in order to obtain the radio zones. Other unsupervised learning techniques that provide similar type of output may also be used, including for example affinity propagation, K medoid, generative topographic maps, elastic maps, or oriented and scalable maps. The results of the unsupervised learning process are the clusters that define the radio zones: areas in the radio environment with similar radio field characteristics. Radio zones are illustrated in Figure 6 and include all the UE RSRP measurements that are similar according to a custom distance function, with each zone represented by a multi-dimensional point in the radio space. As discussed, the number of radio zones typically greatly exceeds the number of cells, depending on the radio environment, which may comprise outdoor macro, or a dense urban mixture of macro and small base stations. It may be advantageous to target 5-10 zones per cell in an urban deployment scenario, such that zones are denser where the change of radio fields is rapid with physical displacement distance.

Once the radio zones are established then each measurement report in a sequence received from a UE may be associated with one of the zones. As a UE moves and periodically reports serving and neighbor cell RSRP measurements, these measurements may be classified to radio zones and a timeline of radio zones through which the UE passes may be established, as illustrated in Figure 6. This timeline of radio zones through which the UE passes is referred to as the motion trajectory of the UE in the radio space.

### Updating of UE trajectories

In step 330, the method 300 comprises updating, in a database, a trajectory of the UE through the radio space of the communication network with the radio zone to which the current radio location of the UE is assigned.

In one example, it is assumed that periodic neighbor-cell RSRP measurements are available from all active UEs. The measurement reporting periodicity can be adaptively set by the network according to the local deployment and UE mobility behavior, for example so as to ensure that spatial sampling of UE motion is adequate but the temporal sampling is not an overwhelming burden on the network. For example, 10s periodicity fits a macro environment with fast moving vehicles, but the methods and systems of the present disclosure may be implemented with a wide range of sampling periodicities.

The trajectory of an individual UE may be represented as a graph comprising a sequence of zone IDs and the timestamps of visits. As other types of RRC event in addition to RSRP measurements are also collected by network management, including handover trigger events, handovers or radio link failures, the transitions of a trajectory graph can be categorized into a particular type according to associated RRC event. For example, a transition from one radio zone to another can involve a handover or can be interrupted by radio link failure. Transitions along a UE trajectory can be marked with RRC events that occur, so that these events become part of the timeline. This processing of UE trajectories may be performed by the UE trajectory builders 406 of the system 400. Together with the segmentation processer 408, discussed in further detail below, the UE trajectory builders may populate the trajectory segment database 410, which is indexed by UE ID and contains time stamped trajectory graphs (zone ID sequences). This is a compact database, which is easily searchable for UE IDs, zone IDs or time periods.

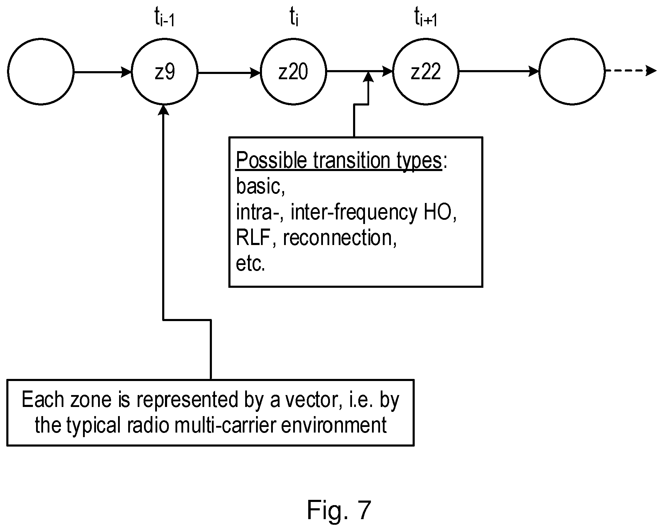

Figure 7 illustrates the compact description of a UE motion trajectory over the radio zones in a multidimensional radio space. Figure 7 shows a sequence of nodes, where each node represents a radio zone to which the UE was assigned on the basis of a neighbor-cell RSRP measurement report. The edges of the graph of Figure 7 correspond to transitions between radio zones corresponding to two consecutive measurement reports over time. Radio zone repetitions may be maintained or dropped from the sequence. Dropping repetitions makes the trajectory descriptions more compact, while keeping repetitions allows more responsive real-time predictions. The decision on whether repetitions should be dropped or maintained in the sequence of a UE trajectory may depend upon the prediction technique used to predict the next radio zone in a trajectory. For example, in many prediction techniques, including the Markov chain prediction discussed above, it is desirable to maintain radio zone repetitions, such that each entry in a trajectory corresponds to a consistent time step. In this manner, probabilities, and predictions, may be generated for a consistent period of time in the future, corresponding to one, two or more entries in the trajectory, and consequently one, two, or more time steps.

With reference to Figure 7, the transition between radio zones is called basic when there is no coincident RRC event in relation to the UE during the transition. Most transitions are basic, but some transitions coincide with certain radio link events, including handover between cells, transition between carriers or potentially radio link failure. Such transitions are marked and can be used in computation of statistics.

The trajectory database is constructed by sorting the trajectories by user ID as shown in Table 3. A trajectory starts as a UE becomes active and lasts while the UE remains active. Several active sessions and associated trajectories can belong to a UE, and a recent, for example a month-long, history of these trajectories can be stored in a database.

Table 3 shows database entries, with each entry representing the trajectory of an active UE. Each entry in the table is a list of tuples, and each tuple corresponds to a stage along the trajectory, that is to a measurement report sent by the UE. The tuple consists of the type of transition via which the UE arrived at the present stage, the timestamp of the measurement report, and the zone in the radio space that the measurement vector was classified or assigned to.

**Table 3: Records of UE trajectories in the trajectory database**

| **User id** | **Radio zones along the trajectory** | | | | | |
|---|---|---|---|---|---|---|
| UE idⱼ | (timeⱼ₁, transitionⱼ₁, zoneⱼ₁) | (timeⱼ₂, transitionⱼ₂, zoneⱼ₂) | (timeⱼ₃, transitionⱼ₃, zoneⱼ₃) | ... | | |
| UE idₖ | (timeₖ₁, transitionₖ₁, zoneₖ₁) | (timeₖ₂, transitionₖ₂, zoneₖ₂) | (timeₖ₃, transitionₖ₃, zoneₖ₃) | (timesₖ₄, transitionₖ₄, zoneₖ₄) | ... | |
| UE idₗ | (timeₗ₁, transitionₗ₁, zoneₗ₁) | ... | | | | |

### Speed classification of UE motion

In step 335, the method 300 may comprise classifying a rate of change of the radio resource environment of the UE on the basis of the updated trajectory. This step may be implemented in the speed classifier and trajectory predictor 412 of the system 400.

When a UE becomes inactive, then its record is finalized in the trajectory database. Once the database is populated with a great number of trajectory records, then initial trajectory analysis may take place, and this analysis may then continue in stream mode and in real-time. One type of analysis may focus on the transitions among radio zones. As discussed above, each radio zone in the radio space is represented by a center point in the radio space, which is considered as the typical radio environment in that radio zone. A distance metric may be used to quantify how far apart two points in the radio space are. If the distance metric is applied to the center points of the radio zones in the radio space, this metric may be used to characterize the change in the radio environment when a UE moves from one radio zone to another. UEs that experience a rapidly changing radio environment may be moving quickly through the physical environment, and/or may be moving through a dense radio environment that changes significantly with physical displacement. Frequent and drastic changes in the radio environment appear as a large distance covered by UEs in the radio space, which may correlate more or less closely with a physical distance covered, depending on the nature of the radio environment.

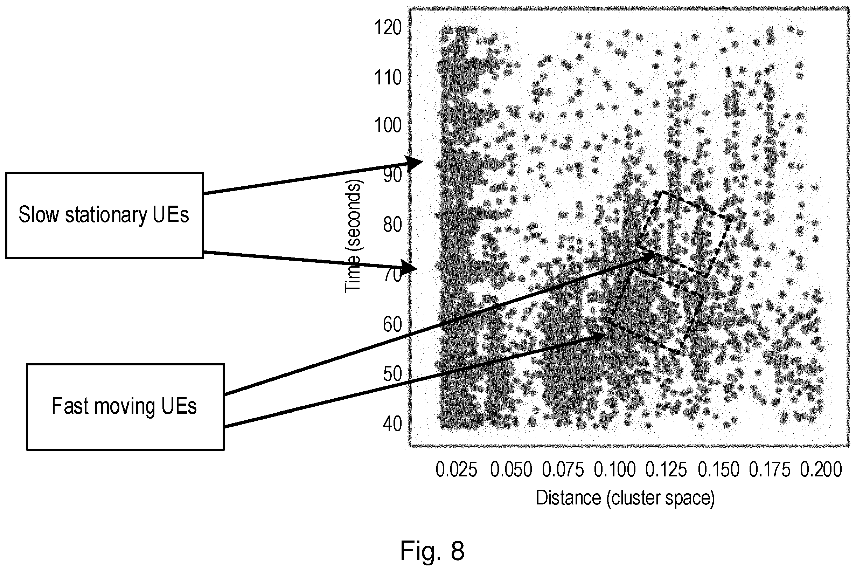

Figure 8 is a real-network example showing the distance traveled in the radio space for different 5-zone long UE trajectory segments, together with the travel time duration. Figure 8 thus illustrates how stationary and moving UEs typically reside in the two dimensional space of radio distance and time. The typical RRC reporting period is 10s, and zone repetitions have been removed in this case. Substantially stationary UEs traverse relatively short distances in long periods of time, while moving UEs have the opposite characteristics.

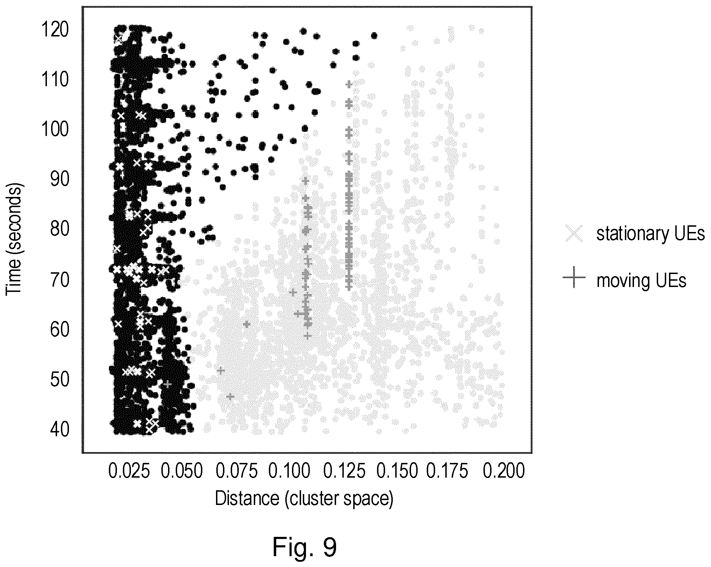

The distinction between stationary and moving UEs can be performed by clustering, and Figure 9 shows the results of such a clustering process. This is a simple illustration with 2 categories only: the trajectories of individual UEs plotted in Figure 8 are classified either as stationary or moving UEs in Figure 9. However, more sophisticated clustering techniques, or other unsupervised learning techniques, can distinguish several speed categories. Examples of algorithms that may be used may include the K-means clustering algorithm and hierarchical clustering. Some UE trajectories in Figure 9 have been verified via a visual location check, to confirm classification results.

### Trajectory predictions

In step 340i, the method 300 may predict a next radio zone through which the UE will pass on the basis of an updated trajectory of the UE and a record of trajectories previously traversed by UEs accessing the communication network. This step may be implemented by the speed classifier and trajectory predictor 412, using trajectory segments from the database 410 prepared by the segmentation processor 408.

While the trajectories of active UEs are evolving, and the lists of Table 3 continue to grow, processing steps may be performed as illustrated in Figure 10, which shows segmentation of trajectories and computation of segment statistics, as may be performed in real time.

UE trajectories may be sliced or truncated in real-time as the trajectories are evolving, using a sliding time window, retaining only the most recent elements of the trajectory. The width of the window may for example be 1 minute, which is sufficient to capture the mobility behavior of most UEs. If the RSRP measurement reporting periodicity is 10s, then the typical length of the 1 minute trajectory segments is a 5-element sequence of zone IDs and transition types. Theoretically, a huge number of such sequences may exist, but in practice focusing on the most frequently occurring sequences may be sufficient, for example the most frequently occurring 10 thousand segments per processing region, which may comprise the "candidate set" of the method 300. A database of these segments may be established in the form illustrated in the lower part of Figure 10. Upon arrival of a new RSRP measurement report, the reported RSRP vector is classified into one of the radio zones and the evolving UE trajectory is appended with the latest zone ID. The slicing window also slides to the current end of the trajectory and cuts the radio zone ID sequence of the last minute. This segment is looked up in the trajectory segment database. If the segment does not exist in the database, then a new record is created, and a counter associated with new record is started. If the segment does already exist in the database, then a counter associated with the segment record is incremented. In some examples, each record may also be associated with a list of UEs and timestamps, noting UE IDs which have passed through the associated trajectory segment and when. The record of UE IDs and timestamps may be used for generating statistics and analysis for a range of purposes.

Once the table in Figure 10 is populated with a sufficient number of segments and occurrences when UEs have traversed the segments, the table can be used for mobility prediction. Several prediction techniques can be considered. In the present discussion, Markovian chain prediction is illustrated as an example, in which probabilities of the possible trajectory continuations are approximated with Bayesian relative occurrence ratios. This may be performed for all active UEs in real time. The relative occurrences are based on the historical UE runs counted over a preceding period while the network configuration can be considered as unchanged.

Figure 11 illustrates mobility prediction based on relative occurrences of trajectory segments. Referring to Figure 11, a prediction scenario is presented relating to the evolving UE trajectory shown at the top of the Figure. The last measurement report from the UE is classified to Zone 22. The trajectory segment occurrence table holds counts for segments of length 5 and shorter, with radio zone repetitions maintained in the zone sequence, so transitions between zones follow the periods of UE measurement reports.

In order to assess the probability of transition to Zone 21 in the next period, the segment lines (z3, z20, z9, z22, z21) and (z3, z20, z9, z22) from the table can be used to estimate the conditional probability of the next transition using the ratio of counts from these lines. Similarly, a probability estimate for the UE remaining in Zone 22 for the next measurement reporting period can be estimated using the segment (z3, z20, z9, z22, z22) from the table. Another option is to look ahead for the next 2 transitions and estimate the probability of (z21, z14) as next steps in the trajectory. This estimate can only be related to a shorter, i.e. 3 step preliminary UE segment, (z20, z9, z22), so the estimate will be less reliable.

### RRC reconfiguration

In step 340, the method 300 comprises using the updated trajectory to calculate a probability of Handover of the UE to neighbor cells of the current serving cell of the UE.

In step 350, the method 300 comprises initiating a Conditional Handover procedure for Handover of the UE to the neighbor cell or cells for which the probability of Handover is above the first Handover threshold value. These steps may be performed by the HO situation analyzer 414 and the RRC reconfiguration module 416 of the system 400.

The following discussion continues the example UE trajectory scenario from Figure 11, and assumes that the transition from radio zone 22 to radio zone 21 in the Markov chain coincides with a cell handover, as does the transition from radio zone 21 to either of radio zones 13 or 14. As discussed above, a good correlation between handovers and certain radio zone transitions can be achieved at the time of clustering to define radio zones by increasing the similarities between measurement reports if the serving cell is the same in the compared measurement records.

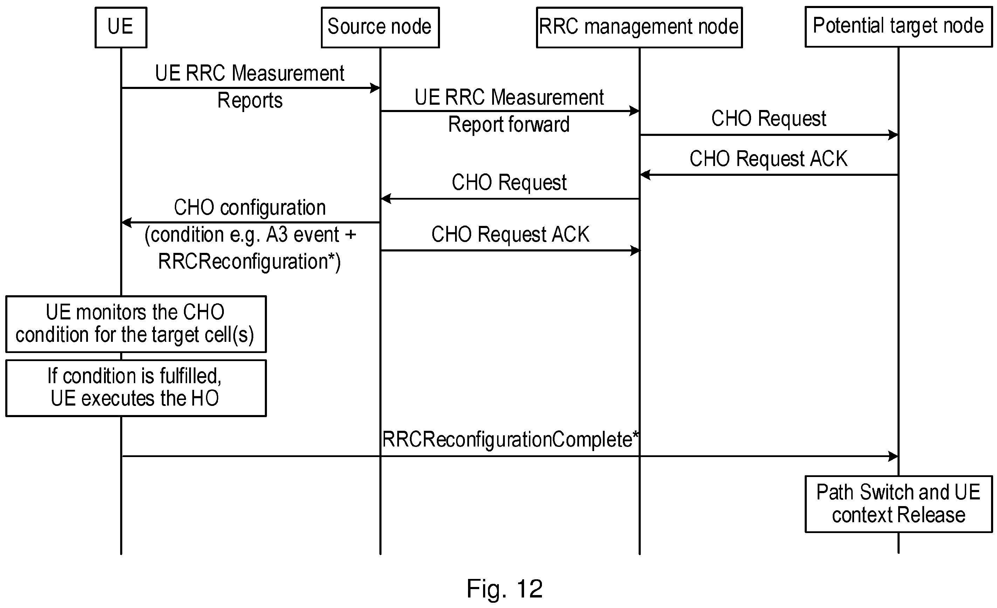

As illustrated in Figure 11, the UE is moving along the (z3, z20, z9, z22) trajectory, and high probabilities are estimated for a continuation along (z21, z14) or (z21, z13). Either of these continuations means a potential handover within 2 measurement reporting periods, for example in 20s in a practical example. A potential handover is determined by a probability of transition to one or more radio zones that is accompanied by a cell handover, which probability is over a first Handover threshold. The value of this threshold, which defines whether or not a handover is probable, can be set according to a particular scenario, where all RRC actions can be associated with cost. If assuring mobility robustness is of high importance and the resources at the network side are easily available, then the first Handover threshold may be set relatively low, so that even a small chance for a handover in the coming measurement periods may trigger the initiation of the Conditional Handover process, as illustrated in Figure 12.

Figure 12 illustrates a modified message diagram for conditional handover, adapting the existing message exchange for Conditional Handover illustrated in Figure 1 to incorporate examples of the present disclosure. Referring to Figure 12, a management node, illustrated as RRC management node, is introduced into the message flow, and takes over the RRC configuration decisions from the base stations. The RRC management node carries out example methods according to the present disclosure, and may for example comprise at least some of the logical elements of the system 400, which elements may be instantiated at the management node.

As illustrated in Figure 12, the RRC management node receives UE RRC measurement reports from the serving base stations, and if the RRC management node determines that the probability for a handover exceeds the first Handover threshold, then the node sends configuration messages first to the potential target node or nodes and, upon receiving acknowledgment from those potential target nodes, the management node notifies the relevant source node to configure the appropriate UE for conditional handover. From this point on, the Conditional Handover procedure is unchanged.

Referring again to the example of Figure 11, as soon as the next measurement report arrives from the UE, the conditional probabilities of possible next radio zones may be updated on the fly. This computation can happen within a few seconds if the data is streamed to network management from the base stations. A response from the network can also happen in seconds. Continuing the example, it is assumed that the next measurement report indicates that the UE is in zone 22, and conditional probabilities based on historical trajectory segment counters are calculated such that zone 21 as the next trajectory stage has a 50% probability, and zone 13 and zone 14 in the following step have a 25% probability. This is also the probability of a handover to a cell which serves zone 13 and 14. Depending upon the value of the first Handover threshold, this handover probability may be assumed to trigger message exchange between network management (the RRC management node) and the potential target and source cells according to Figure 12. First the RRC management node requests the potential target cell (the cell serving radio zones 13 and 14) to prepare for the arrival of the particular UE. Upon acknowledgement, network management notifies the source cell for the UE that the preparation for Conditional Handover has been completed, so the source cell can send the handover condition (Handover parameters) to the UE.

If the UE follows the assumed track to Zone 13 or 14, the handover is executed. However, in many cases the UE may proceed along another trajectory. In the example of Figure 11, the UE may stay in Zone 22 or 21, and turn later towards a direction where handover in the near future is less probable. The RRC management node continues predicting next radio zones in the UE's trajectory, updating probabilities and notifying potential target cells when the UE is no longer expected to handover to those cells, so the allocated resources in the potential target cell can be released. The RRC management node also notifies the source cell that it can reconfigure the UE such that the relevant handover condition sent to the UE is to be removed from its internal monitoring list. The second Handover threshold, which defines when a handover is no longer probable, and the conditional handover process should be cancelled, may be set according to a particular deployment scenario and/or network priorities, and may in some examples be the same as the first Handover threshold.

Other ways of implementing the conditional handover related message flow, for example involving expiration timers and confirmation messages from the side of network management, may be envisaged. For example, the messages initiating conditional handover both for the UE and potential target cell could include an expiration timer, for example set for 30s. This timer could be included in the message forwarded by the serving cell to the UE and containing handover parameters, and in the conditional handover request message sent to a potential target cell and requesting reservation of resources for the UE. If the timer expires before handover has taken place, then both the UE and the potential target cell may cancel the conditional handover: the UE removes the condition for handover defined by the handover parameters, and the target cell releases the reserved resources. The RRC management node is aware of the timer, and if on approaching expiration of the timer the handover is still probable, then the RRC management node may send elongation messages to both the UE (via its serving cell) and the potential target cell. Such messages could include a new value for the expiration timer. Under such implementations of the conditional handover related message flow, the RRC management node continues to maintain an overall, instantaneous view of what handover conditions each UE should be configured with, and what resource reservations each potential target cell should allocate for UE arrivals. The configurations and reservations that should be implemented will evolve dynamically as UEs move through the radio space, and the RRC management node maintains appropriate reservation of resources in the relevant radio access nodes, and appropriately configures the UEs via their serving cells. The RRC management node is thus a distinct logical entity in the network, performing handover related management functions though the execution of methods according to the present disclosure.

### Generation of Handover parameters

In step 350, the method 300 comprises initiating conditional Handover of a UE to a neighbor cell for which the probability of handover is above the first Handover threshold value. This may involve, in step 350i, generating Handover parameters for Handover of the UE to the neighbor cell, and may be performed by the RRC configuration module 416.

The method steps discussed above with reference to Figures 5 to 12 enable the determination of which neighbor cells should be prepared for conditional handover, and at what time appropriate communications should be sent. The following discussion covers the generation of Handover parameters that are appropriate for the instantaneous mobility status of a UE to be reconfigured.

The above discussed tracking of the motion of UEs in the radio space in real time, and motion prediction and speed classification based on this tracking, provide a roughly minute-long history of, and a 20s look ahead to, the UE motion. Both the instant radio speed classification of step 335, and the motion prediction for the UE of step 340i, may be used to set a customized handover margin and Time-to-Trigger condition for the UE with respect to a possible target cell.

As discussed above, speed in this context refers to the rate of change of the radio environment experienced by the UE, and not to the physical speed of the UE. For example, in a micro-cell environment, where the carrier frequency is in the 2.5-5GHz domain, a UE moving at a speed of 6 km/h can experience a rate of change of its radio environment that is the same as if the UE moved at a speed of 120 km/h in a macro cell environment operating below 2GHz.

Predicted trajectory, which may include predictions concerning whether or not the rate and direction of motion in the radio environment will remain consistent in the near future, may be used to identify and predict possible "ping-pong", or intermediate handover situations. In general, short-jump or ping-pong handovers should be avoided in a radio network. In some examples of the present disclosure, an estimate can be made of the probability of staying in a target cell as a function of sojourn time. This measure can be quantized to simplify the computation of handover parameters.

The speed of the UE through the radio environment, and the probabilistic estimate about how stable the target cell will be for the UE, may together be used to generate appropriate Handover parameters. For a simple illustration, it is assumed that there are established:
- Three speed categories: stationary, slow and fast, and
- Two reliability levels for the target cell: high, meaning the UE is expected to stay in the target cell for at least 10s for example, and low, meaning that the UE is expected to make another handover before 10s have elapsed.

Using this quantization of input parameters, a simple mapping can be established from speed category and target cell reliability to handover margin and Time-To-Trigger. The parameters may also be quantized, for example setting potential values 1, 2 or 3 dB for the handover margin and 160 or 320 ms for the time to trigger. Table 4 provides an example mapping table for the proposed parameters:

**Table 4**

| UE speed | Target cell reliability | HO margin | HO time to trigger |
|---|---|---|---|
| Stationary | High | 3dB | 160 ms |
| Stationary | Low | 3dB | 320 ms |
| Slow | High | 2dB | 160 ms |
| Slow | Low | 2dB | 320 ms |
| Fast | High | 1dB | 160 ms |
| Fast | Low | 1dB | 320 ms |

The values in Table 4 are provided merely for the purposes of illustration, and it will be appreciated that optimal values may be set after fine-tuning and testing the applied speed and prediction metrics. In addition, the table-based lookup described above can be replaced by more sophisticated Artificial Intelligence based techniques, for example using a Supervised or Semi-Supervised Learning algorithm to determine a function for mapping input metrics to output handover parameters.

As discussed above, the methods 200 and 300 may be implemented via system 400, which represents one logical framework for implementing the methods. Elements of the system 400 may be instantiated in a management node, and the present disclosure provides a management node that is adapted to perform any or all of the steps of the above discussed methods. The management node may be a physical or virtual node, and may for example comprise a virtualised function that is running in a cloud, edge cloud or fog deployment. In some examples, instantiating the management node in an edge cloud can ensure that the majority of data used in carrying out the methods does not have to travel to the core network, and so does not increase load on the backhaul network.

The management node may carry out the methods by implementing some or all of the logical system elements described above, or in any other appropriate manner. The management node may for example comprise or be instantiated in any part of a logical core network node, network management center, network operations center, Radio Access node etc. Any such communication network node may itself be divided between several logical and/or physical functions, and any one or more parts of the management node may be instantiated in one or more logical or physical functions of a communication network node.

Figure 13 is a block diagram illustrating an embodiment of management node 1300 which implements the method 200 and/or 300, as elaborated in Figures 2 to 12, according to embodiments of the present disclosure, for example on receipt of suitable instructions from a computer program 1350. Referring to Figure 13, the management node 1300 comprises a processor or processing circuitry 1302, and may comprise a memory 1304 and interfaces 1306. The processing circuitry 1302 is operable to perform some or all of the steps of the method 200 and/or 300 as discussed above with reference to Figures 2 to 12. The memory 1304 may contain instructions executable by the processing circuitry 1302 such that the management node 1300 is operable to perform some or all of the steps of the method 200 and/or 300, as elaborated in Figures 2 to 12. The instructions may also include instructions for executing one or more telecommunications and/or data communications protocols. The instructions may be stored in the form of the computer program 1350. In some examples, the processor or processing circuitry 1302 may include one or more microprocessors or microcontrollers, as well as other digital hardware, which may include digital signal processors (DSPs), special-purpose digital logic, etc. The processor or processing circuitry 1302 may be implemented by any type of integrated circuit, such as an Application Specific Integrated Circuit (ASIC), Field Programmable Gate Array (FPGA) etc. The memory 1304 may include one or several types of memory suitable for the processor, such as read-only memory (ROM), random-access memory, cache memory, flash memory devices, optical storage devices, solid state disk, hard disk drive etc.

Figure 14 illustrates functional modules in another example of management node 1400 which may execute examples of the methods 200 and/or 300 of the present disclosure, for example according to computer readable instructions received from a computer program. It will be understood that the modules illustrated in Figure 14 are functional modules, and may be realised in any appropriate combination of hardware and/or software. The modules may comprise one or more processors and may be integrated to any degree.

Referring to Figure 14, the management node 1400 is for managing Conditional Handover of a UE in a cellular communication network, wherein the communication network comprises a plurality of radio resources, each radio resource defining a dimension of a multidimensional radio space over which the communication network extends. The management node 1400 comprises a receiving module 1402 for receiving a report of radio resource measurements performed by a UE. The management node also comprises a locating module 1404 for assigning a current radio location of the UE to a radio zone of the communication network on the basis of the contents of the report, wherein a radio zone comprises a region of the multidimensional radio space over which the communication network extends that is defined by a particular combination of radio field characteristics, and wherein each cell of the communication network comprises a plurality of radio zones. The management node further comprises a trajectory module 1406 for updating, in a database, a trajectory of the UE through the radio space of the communication network with the radio zone to which the current radio location of the UE is assigned, and a handover module 1408 for using the updated trajectory to calculate a probability of Handover of the UE to neighbor cells of the current serving cell of the UE. The management node further comprises a configuration module 1410 for initiating a Conditional Handover procedure for Handover of the UE to neighbor cells for which the probability of Handover is above a first Handover threshold value. The management node 1400 may further comprise interfaces 1412 which may be operable to facilitate communication with a serving cell of the UE and with the neighbour cells over suitable communication channels.

Examples of the present disclosure thus propose methods and a management node that are operable to implement network-side logic that enables robust handovers in a cellular system. Examples of the present disclosure enable the determining of:
- when a conditional handover request should be sent to potential target cells,
- when an RRC reconfiguration message for Conditional Handover should be sent out to a UE,
- what cells should be specified as target cells,
- what handover trigger condition (handover parameters) and access resources should be associated with respect to each potential target cell
- when a cancelling RRC reconfiguration message for Conditional Handover should be sent out to the UE,
- what cells the UE has to cancel as potential target cells.

Examples of the methods disclosed herein make use of radio fingerprinting, which provides compact and searchable descriptions for UE trajectories with sub-cell resolution. The methods disclosed herein enable the efficient implementation of Conditional Handover, as well as other handover and RRC related procedures which are intended to increase network resilience to disturbances owing to UE mobility. It will be appreciated that examples of the method may be implemented using only those measurements which are already used and standardized in currently operational networks such as 3GPP networks. For example, current LTE systems are operable to provide the relevant information. It is an advantage of the methods disclosed herein that the parameters which may be used to customize implementation of the methods, including handover thresholds, timings, segment lengths, classification parameters etc., can be set according to network priorities and/or specific deployment requirements, and may also or alternatively be automatically tuned by a learning system according to the motion behavior of individual UEs.

Examples of the methods disclosed herein ensure appropriate timing of Conditional Handover preparations both at the UE and potential target cells, eliminating unnecessary RRC reconfiguration messages to UEs on the radio interface, as well as minimizing handover-related resource allocations at potential target cells. Examples of the methods disclosed herein can also optimize RRC messages, ensure smooth and robust handovers and improve the Quality of Experience for the UEs.

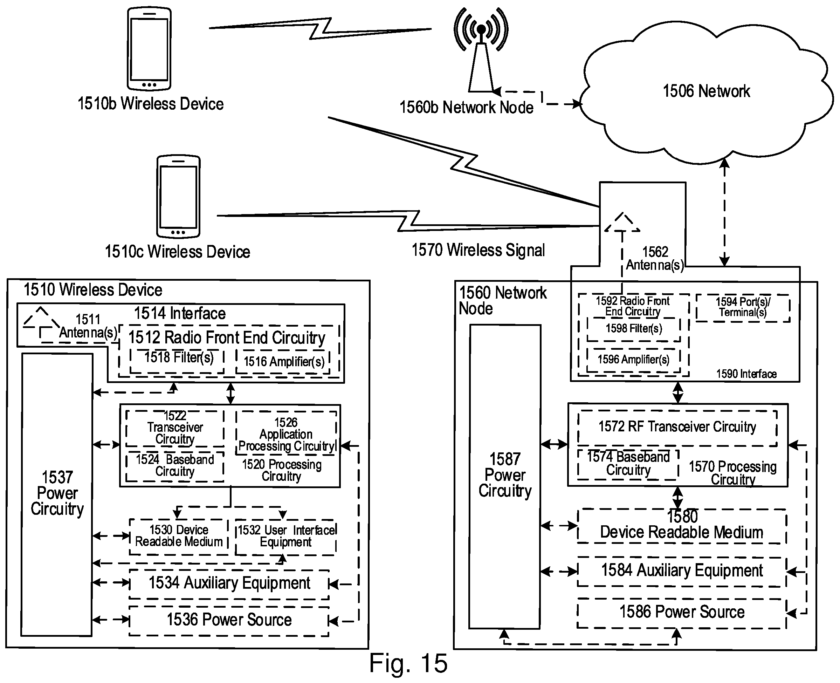

Although the subject matter described herein may be implemented in any appropriate type of system using any suitable components, the examples disclosed herein are described in relation to a wireless network, such as the example wireless network illustrated in Figure 15. For simplicity, the wireless network of Figure 15 only depicts network 1506, network nodes 1560 and 1560b, and WDs 1510, 1510b, and 1510c. In practice, a wireless network may further include any additional elements suitable to support communication between wireless devices or between a wireless device and another communication device, such as a landline telephone, a service provider, or any other network node or end device. Of the illustrated components, network node 1560 and wireless device (WD) 1510 are depicted with additional detail. The wireless network may provide communication and other types of services to one or more wireless devices to facilitate the wireless devices' access to and/or use of the services provided by, or via, the wireless network.

The wireless network may comprise and/or interface with any type of communication, telecommunication, data, cellular, and/or radio network or other similar type of system. In some embodiments, the wireless network may be configured to operate according to specific standards or other types of predefined rules or procedures. Thus, particular embodiments of the wireless network may implement communication standards, such as Global System for Mobile Communications (GSM), Universal Mobile Telecommunications System (UMTS), Long Term Evolution (LTE), and/or other suitable 2G, 3G, 4G, or 5G standards; wireless local area network (WLAN) standards, such as the IEEE 802.11 standards; and/or any other appropriate wireless communication standard, such as the Worldwide Interoperability for Microwave Access (WiMax), Bluetooth, Z-Wave and/or ZigBee standards.

Network 1506 may comprise one or more backhaul networks, core networks, IP networks, public switched telephone networks (PSTNs), packet data networks, optical networks, wide-area networks (WANs), local area networks (LANs), wireless local area networks (WLANs), wired networks, wireless networks, metropolitan area networks, and other networks to enable communication between devices.

Network node 1560 and WD 1510 comprise various components described in more detail below. These components work together in order to provide network node and/or wireless device functionality, such as providing wireless connections in a wireless network. In different embodiments, the wireless network may comprise any number of wired or wireless networks, network nodes, base stations, controllers, wireless devices, relay stations, and/or any other components or systems that may facilitate or participate in the communication of data and/or signals whether via wired or wireless connections.

As used herein, network node refers to equipment capable, configured, arranged and/or operable to communicate directly or indirectly with a wireless device and/or with other network nodes or equipment in the wireless network to enable and/or provide wireless access to the wireless device and/or to perform other functions (e.g., administration) in the wireless network. Examples of network nodes include, but are not limited to, access points (APs) (e.g., radio access points), base stations (BSs) (e.g., radio base stations, Node Bs, evolved Node Bs (eNBs) and NR NodeBs (gNBs)). Base stations may be categorized based on the amount of coverage they provide (or, stated differently, their transmit power level) and may then also be referred to as femto base stations, pico base stations, micro base stations, or macro base stations. A base station may be a relay node or a relay donor node controlling a relay. A network node may also include one or more (or all) parts of a distributed radio base station such as centralized digital units and/or remote radio units (RRUs), sometimes referred to as Remote Radio Heads (RRHs). Such remote radio units may or may not be integrated with an antenna as an antenna integrated radio. Parts of a distributed radio base station may also be referred to as nodes in a distributed antenna system (DAS). Yet further examples of network nodes include multi-standard radio (MSR) equipment such as MSR BSs, network controllers such as radio network controllers (RNCs) or base station controllers (BSCs), base transceiver stations (BTSs), transmission points, transmission nodes, multi-cell/multicast coordination entities (MCEs), core network nodes (e.g., MSCs, MMEs), O&M nodes, OSS nodes, SON nodes, positioning nodes (e.g., E-SMLCs), and/or MDTs. As another example, a network node may be a virtual network node as described in more detail below. More generally, however, network nodes may represent any suitable device (or group of devices) capable, configured, arranged, and/or operable to enable and/or provide a wireless device with access to the wireless network or to provide some service to a wireless device that has accessed the wireless network.

In Figure 15, network node 1560 includes processing circuitry 1570, device readable medium 1580, interface 1590, auxiliary equipment 1584, power source 1586, power circuitry 1587, and antenna 1562. Although network node 1560 illustrated in the example wireless network of Figure 15 may represent a device that includes the illustrated combination of hardware components, other embodiments may comprise network nodes with different combinations of components. It is to be understood that a network node comprises any suitable combination of hardware and/or software needed to perform the tasks, features, functions and methods disclosed herein. Moreover, while the components of network node 1560 are depicted as single boxes located within a larger box, or nested within multiple boxes, in practice, a network node may comprise multiple different physical components that make up a single illustrated component (e.g., device readable medium 1580 may comprise multiple separate hard drives as well as multiple RAM modules).

Similarly, network node 1560 may be composed of multiple physically separate components (e.g., a NodeB component and a RNC component, or a BTS component and a BSC component, etc.), which may each have their own respective components. In certain scenarios in which network node 1560 comprises multiple separate components (e.g., BTS and BSC components), one or more of the separate components may be shared among several network nodes. For example, a single RNC may control multiple NodeB's. In such a scenario, each unique NodeB and RNC pair, may in some instances be considered a single separate network node. In some embodiments, network node 1560 may be configured to support multiple radio access technologies (RATs). In such embodiments, some components may be duplicated (e.g., separate device readable medium 1580 for the different RATs) and some components may be reused (e.g., the same antenna 1562 may be shared by the RATs). Network node 1560 may also include multiple sets of the various illustrated components for different wireless technologies integrated into network node 1560, such as, for example, GSM, WCDMA, LTE, NR, WiFi, or Bluetooth wireless technologies. These wireless technologies may be integrated into the same or different chip or set of chips and other components within network node 1560.

Processing circuitry 1570 is configured to perform any determining, calculating, or similar operations (e.g., certain obtaining operations) described herein as being provided by a network node. These operations performed by processing circuitry 1570 may include processing information obtained by processing circuitry 1570 by, for example, converting the obtained information into other information, comparing the obtained information or converted information to information stored in the network node, and/or performing one or more operations based on the obtained information or converted information, and as a result of said processing making a determination.

Processing circuitry 1570 may comprise a combination of one or more of a microprocessor, controller, microcontroller, central processing unit, digital signal processor, application-specific integrated circuit, field programmable gate array, or any other suitable computing device, resource, or combination of hardware, software and/or encoded logic operable to provide, either alone or in conjunction with other network node 1560 components, such as device readable medium 1580, network node 1560 functionality. For example, processing circuitry 1570 may execute instructions stored in device readable medium 1580 or in memory within processing circuitry 1570. Such functionality may include providing any of the various wireless features, functions, or benefits discussed herein. In some embodiments, processing circuitry 1570 may include a system on a chip (SOC).

In some embodiments, processing circuitry 1570 may include one or more of radio frequency (RF) transceiver circuitry 1572 and baseband processing circuitry 1574. In some embodiments, radio frequency (RF) transceiver circuitry 1572 and baseband processing circuitry 1574 may be on separate chips (or sets of chips), boards, or units, such as radio units and digital units. In alternative embodiments, part or all of RF transceiver circuitry 1572 and baseband processing circuitry 1574 may be on the same chip or set of chips, boards, or units

In certain embodiments, some or all of the functionality described herein as being provided by a network node, base station, eNB or other such network device may be performed by processing circuitry 1570 executing instructions stored on device readable medium 1580 or memory within processing circuitry 1570. In alternative embodiments, some or all of the functionality may be provided by processing circuitry 1570 without executing instructions stored on a separate or discrete device readable medium, such as in a hard-wired manner. In any of those embodiments, whether executing instructions stored on a device readable storage medium or not, processing circuitry 1570 can be configured to perform the described functionality. The benefits provided by such functionality are not limited to processing circuitry 1570 alone or to other components of network node 1560, but are enjoyed by network node 1560 as a whole, and/or by end users and the wireless network generally.

Device readable medium 1580 may comprise any form of volatile or non-volatile computer readable memory including, without limitation, persistent storage, solid-state memory, remotely mounted memory, magnetic media, optical media, random access memory (RAM), read-only memory (ROM), mass storage media (for example, a hard disk), removable storage media (for example, a flash drive, a Compact Disk (CD) or a Digital Video Disk (DVD)), and/or any other volatile or non-volatile, non-transitory device readable and/or computer-executable memory devices that store information, data, and/or instructions that may be used by processing circuitry 1570. Device readable medium 1580 may store any suitable instructions, data or information, including a computer program, software, an application including one or more of logic, rules, code, tables, etc. and/or other instructions capable of being executed by processing circuitry 1570 and, utilized by network node 1560. Device readable medium 1580 may be used to store any calculations made by processing circuitry 1570 and/or any data received via interface 1590. In some embodiments, processing circuitry 1570 and device readable medium 1580 may be considered to be integrated.

Interface 1590 is used in the wired or wireless communication of signaling and/or data between network node 1560, network 1506, and/or WDs 1510. As illustrated, interface 1590 comprises port(s)/terminal(s) 1594 to send and receive data, for example to and from network 1506 over a wired connection. Interface 1590 also includes radio front end circuitry 1592 that may be coupled to, or in certain embodiments a part of, antenna 1562. Radio front end circuitry 1592 comprises filters 1598 and amplifiers 1596. Radio front end circuitry 1592 may be connected to antenna 1562 and processing circuitry 1570. Radio front end circuitry may be configured to condition signals communicated between antenna 1562 and processing circuitry 1570. Radio front end circuitry 1592 may receive digital data that is to be sent out to other network nodes or WDs via a wireless connection. Radio front end circuitry 1592 may convert the digital data into a radio signal having the appropriate channel and bandwidth parameters using a combination of filters 1598 and/or amplifiers 1596. The radio signal may then be transmitted via antenna 1562. Similarly, when receiving data, antenna 1562 may collect radio signals which are then converted into digital data by radio front end circuitry 1592. The digital data may be passed to processing circuitry 1570. In other embodiments, the interface may comprise different components and/or different combinations of components.

In certain alternative embodiments, network node 1560 may not include separate radio front end circuitry 1592, instead, processing circuitry 1570 may comprise radio front end circuitry and may be connected to antenna 1562 without separate radio front end circuitry 1592. Similarly, in some embodiments, all or some of RF transceiver circuitry 1572 may be considered a part of interface 1590. In still other embodiments, interface 1590 may include one or more ports or terminals 1594, radio front end circuitry 1592, and RF transceiver circuitry 1572, as part of a radio unit (not shown), and interface 1590 may communicate with baseband processing circuitry 1574, which is part of a digital unit (not shown).

Antenna 1562 may include one or more antennas, or antenna arrays, configured to send and/or receive wireless signals. Antenna 1562 may be coupled to radio front end circuitry 1590 and may be any type of antenna capable of transmitting and receiving data and/or signals wirelessly. In some embodiments, antenna 1562 may comprise one or more omni-directional, sector or panel antennas operable to transmit/receive radio signals between, for example, 2 GHz and 66 GHz. An omni-directional antenna may be used to transmit/receive radio signals in any direction, a sector antenna may be used to transmit/receive radio signals from devices within a particular area, and a panel antenna may be a line of sight antenna used to transmit/receive radio signals in a relatively straight line. In some instances, the use of more than one antenna may be referred to as MIMO. In certain embodiments, antenna 1562 may be separate from network node 1560 and may be connectable to network node 1560 through an interface or port.

Antenna 1562, interface 1590, and/or processing circuitry 1570 may be configured to perform any receiving operations and/or certain obtaining operations described herein as being performed by a network node. Any information, data and/or signals may be received from a wireless device, another network node and/or any other network equipment. Similarly, antenna 1562, interface 1590, and/or processing circuitry 1570 may be configured to perform any transmitting operations described herein as being performed by a network node. Any information, data and/or signals may be transmitted to a wireless device, another network node and/or any other network equipment.

Power circuitry 1587 may comprise, or be coupled to, power management circuitry and is configured to supply the components of network node 1560 with power for performing the functionality described herein. Power circuitry 1587 may receive power from power source 1586. Power source 1586 and/or power circuitry 1587 may be configured to provide power to the various components of network node 1560 in a form suitable for the respective components (e.g., at a voltage and current level needed for each respective component). Power source 1586 may either be included in, or external to, power circuitry 1587 and/or network node 1560. For example, network node 1560 may be connectable to an external power source (e.g., an electricity outlet) via an input circuitry or interface such as an electrical cable, whereby the external power source supplies power to power circuitry 1587. As a further example, power source 1586 may comprise a source of power in the form of a battery or battery pack which is connected to, or integrated in, power circuitry 1587. The battery may provide backup power should the external power source fail. Other types of power sources, such as photovoltaic devices, may also be used.

Alternative embodiments of network node 1560 may include additional components beyond those shown in Figure 15 that may be responsible for providing certain aspects of the network node's functionality, including any of the functionality described herein and/or any functionality necessary to support the subject matter described herein. For example, network node 1560 may include user interface equipment to allow input of information into network node 1560 and to allow output of information from network node 1560. This may allow a user to perform diagnostic, maintenance, repair, and other administrative functions for network node 1560.

As discussed above, wireless device (WD) refers to a device capable, configured, arranged and/or operable to communicate wirelessly with network nodes and/or other wireless devices. Unless otherwise noted, the term WD may be used interchangeably herein with user equipment (UE).

As illustrated, wireless device 1510 includes antenna 1511, interface 1514, processing circuitry 1520, device readable medium 1530, user interface equipment 1532, auxiliary equipment 1534, power source 1536 and power circuitry 1537. WD 1510 may include multiple sets of one or more of the illustrated components for different wireless technologies supported by WD 1510, such as, for example, GSM, WCDMA, LTE, NR, WiFi, WiMAX, or Bluetooth wireless technologies, just to mention a few. These wireless technologies may be integrated into the same or different chips or set of chips as other components within WD 1510.

Antenna 1511 may include one or more antennas or antenna arrays, configured to send and/or receive wireless signals, and is connected to interface 1514. In certain alternative embodiments, antenna 1511 may be separate from WD 1510 and be connectable to WD 1510 through an interface or port. Antenna 1511, interface 1514, and/or processing circuitry 1520 may be configured to perform any receiving or transmitting operations described herein as being performed by a WD. Any information, data and/or signals may be received from a network node and/or another WD. In some embodiments, radio front end circuitry and/or antenna 1511 may be considered an interface.

As illustrated, interface 1514 comprises radio front end circuitry 1512 and antenna 1511. Radio front end circuitry 1512 comprise one or more filters 1518 and amplifiers 1516. Radio front end circuitry 1514 is connected to antenna 1511 and processing circuitry 1520, and is configured to condition signals communicated between antenna 1511 and processing circuitry 1520. Radio front end circuitry 1512 may be coupled to or a part of antenna 1511. In some embodiments, WD 1510 may not include separate radio front end circuitry 1512; rather, processing circuitry 1520 may comprise radio front end circuitry and may be connected to antenna 1511. Similarly, in some embodiments, some or all of RF transceiver circuitry 1522 may be considered a part of interface 1514. Radio front end circuitry 1512 may receive digital data that is to be sent out to other network nodes or WDs via a wireless connection. Radio front end circuitry 1512 may convert the digital data into a radio signal having the appropriate channel and bandwidth parameters using a combination of filters 1518 and/or amplifiers 1516. The radio signal may then be transmitted via antenna 1511. Similarly, when receiving data, antenna 1511 may collect radio signals which are then converted into digital data by radio front end circuitry 1512. The digital data may be passed to processing circuitry 1520. In other embodiments, the interface may comprise different components and/or different combinations of components.

Processing circuitry 1520 may comprise a combination of one or more of a microprocessor, controller, microcontroller, central processing unit, digital signal processor, application-specific integrated circuit, field programmable gate array, or any other suitable computing device, resource, or combination of hardware, software, and/or encoded logic operable to provide, either alone or in conjunction with other WD 1510 components, such as device readable medium 1530, WD 1510 functionality. Such functionality may include providing any of the various wireless features or benefits discussed herein. For example, processing circuitry 1520 may execute instructions stored in device readable medium 1530 or in memory within processing circuitry 1520 to provide the functionality disclosed herein.

As illustrated, processing circuitry 1520 includes one or more of RF transceiver circuitry 1522, baseband processing circuitry 1524, and application processing circuitry 1526. In other embodiments, the processing circuitry may comprise different components and/or different combinations of components. In certain embodiments processing circuitry 1520 of WD 1510 may comprise a SOC. In some embodiments, RF transceiver circuitry 1522, baseband processing circuitry 1524, and application processing circuitry 1526 may be on separate chips or sets of chips. In alternative embodiments, part or all of baseband processing circuitry 1524 and application processing circuitry 1526 may be combined into one chip or set of chips, and RF transceiver circuitry 1522 may be on a separate chip or set of chips. In still alternative embodiments, part or all of RF transceiver circuitry 1522 and baseband processing circuitry 1524 may be on the same chip or set of chips, and application processing circuitry 1526 may be on a separate chip or set of chips. In yet other alternative embodiments, part or all of RF transceiver circuitry 1522, baseband processing circuitry 1524, and application processing circuitry 1526 may be combined in the same chip or set of chips. In some embodiments, RF transceiver circuitry 1522 may be a part of interface 1514. RF transceiver circuitry 1522 may condition RF signals for processing circuitry 1520.

In certain embodiments, some or all of the functionality described herein as being performed by a WD may be provided by processing circuitry 1520 executing instructions stored on device readable medium 1530, which in certain embodiments may be a computer-readable storage medium. In alternative embodiments, some or all of the functionality may be provided by processing circuitry 1520 without executing instructions stored on a separate or discrete device readable storage medium, such as in a hard-wired manner. In any of those particular embodiments, whether executing instructions stored on a device readable storage medium or not, processing circuitry 1520 can be configured to perform the described functionality. The benefits provided by such functionality are not limited to processing circuitry 1520 alone or to other components of WD 1510, but are enjoyed by WD 1510 as a whole, and/or by end users and the wireless network generally.

Processing circuitry 1520 may be configured to perform any determining, calculating, or similar operations (e.g., certain obtaining operations) described herein as being performed by a WD. These operations, as performed by processing circuitry 1520, may include processing information obtained by processing circuitry 1520 by, for example, converting the obtained information into other information, comparing the obtained information or converted information to information stored by WD 1510, and/or performing one or more operations based on the obtained information or converted information, and as a result of said processing making a determination.

Device readable medium 1530 may be operable to store a computer program, software, an application including one or more of logic, rules, code, tables, etc. and/or other instructions capable of being executed by processing circuitry 1520. Device readable medium 1530 may include computer memory (e.g., Random Access Memory (RAM) or Read Only Memory (ROM)), mass storage media (e.g., a hard disk), removable storage media (e.g., a Compact Disk (CD) or a Digital Video Disk (DVD)), and/or any other volatile or non-volatile, non-transitory device readable and/or computer executable memory devices that store information, data, and/or instructions that may be used by processing circuitry 1520. In some embodiments, processing circuitry 1520 and device readable medium 1530 may be considered to be integrated.

User interface equipment 1532 may provide components that allow for a human user to interact with WD 1510. Such interaction may be of many forms, such as visual, audial, tactile, etc. User interface equipment 1532 may be operable to produce output to the user and to allow the user to provide input to WD 1510. The type of interaction may vary depending on the type of user interface equipment 1532 installed in WD 1510. For example, if WD 1510 is a smart phone, the interaction may be via a touch screen; if WD 1510 is a smart meter, the interaction may be through a screen that provides usage (e.g., the number of gallons used) or a speaker that provides an audible alert (e.g., if smoke is detected). User interface equipment 1532 may include input interfaces, devices and circuits, and output interfaces, devices and circuits. User interface equipment 1532 is configured to allow input of information into WD 1510, and is connected to processing circuitry 1520 to allow processing circuitry 1520 to process the input information. User interface equipment 1532 may include, for example, a microphone, a proximity or other sensor, keys/buttons, a touch display, one or more cameras, a USB port, or other input circuitry. User interface equipment 1532 is also configured to allow output of information from WD 1510, and to allow processing circuitry 1520 to output information from WD 1510. User interface equipment 1532 may include, for example, a speaker, a display, vibrating circuitry, a USB port, a headphone interface, or other output circuitry. Using one or more input and output interfaces, devices, and circuits, of user interface equipment 1532, WD 1510 may communicate with end users and/or the wireless network, and allow them to benefit from the functionality described herein.

Auxiliary equipment 1534 is operable to provide more specific functionality which may not be generally performed by WDs. This may comprise specialized sensors for doing measurements for various purposes, interfaces for additional types of communication such as wired communications etc. The inclusion and type of components of auxiliary equipment 1534 may vary depending on the embodiment and/or scenario.

Power source 1536 may, in some embodiments, be in the form of a battery or battery pack. Other types of power sources, such as an external power source (e.g., an electricity outlet), photovoltaic devices or power cells, may also be used. WD 1510 may further comprise power circuitry 1537 for delivering power from power source 1536 to the various parts of WD 1510 which need power from power source 1536 to carry out any functionality described or indicated herein. Power circuitry 1537 may in certain embodiments comprise power management circuitry. Power circuitry 1537 may additionally or alternatively be operable to receive power from an external power source; in which case WD 1510 may be connectable to the external power source (such as an electricity outlet) via input circuitry or an interface such as an electrical power cable. Power circuitry 1537 may also in certain embodiments be operable to deliver power from an external power source to power source 1536. This may be, for example, for the charging of power source 1536. Power circuitry 1537 may perform any formatting, converting, or other modification to the power from power source 1536 to make the power suitable for the respective components of WD 1510 to which power is supplied.

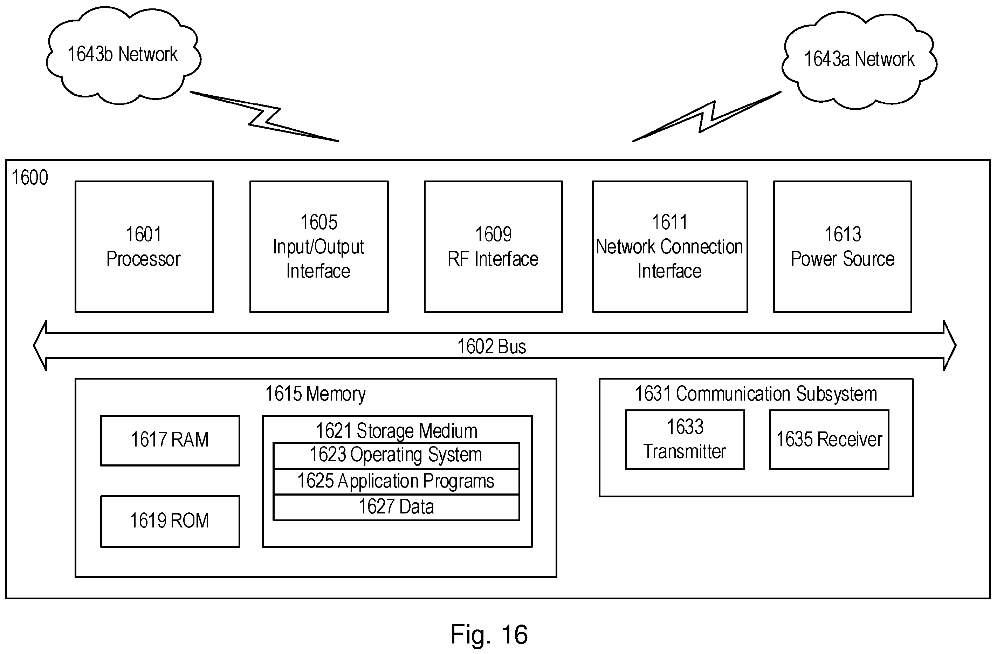

Figure 16 illustrates one embodiment of a UE in accordance with various aspects described herein. As used herein, a user equipment or UE may not necessarily have a user in the sense of a human user who owns and/or operates the relevant device. Instead, a UE may represent a device that is intended for sale to, or operation by, a human user but which may not, or which may not initially, be associated with a specific human user (e.g., a smart sprinkler controller). Alternatively, a UE may represent a device that is not intended for sale to, or operation by, an end user but which may be associated with or operated for the benefit of a user (e.g., a smart power meter). UE 1600 may be any UE identified by the 3rd Generation Partnership Project (3GPP), including a NB-loT UE, a machine type communication (MTC) UE, and/or an enhanced MTC (eMTC) UE. UE 1600, as illustrated in Figure 16, is one example of a WD configured for communication in accordance with one or more communication standards promulgated by the 3rd Generation Partnership Project (3GPP), such as 3GPP's GSM, UMTS, LTE, and/or 5G standards. As mentioned previously, the term WD and UE may be used interchangeable. Accordingly, although Figure 16 is a UE, the components discussed herein are equally applicable to a WD, and vice-versa.

In Figure 16, UE 1600 includes processing circuitry 1601 that is operatively coupled to input/output interface 1605, radio frequency (RF) interface 1609, network connection interface 1611, memory 1615 including random access memory (RAM) 1617, read-only memory (ROM) 1619, and storage medium 1621 or the like, communication subsystem 1631, power source 1633, and/or any other component, or any combination thereof. Storage medium 1621 includes operating system 1623, application program 1625, and data 1627. In other embodiments, storage medium 1621 may include other similar types of information. Certain UEs may utilize all of the components shown in Figure 16, or only a subset of the components. The level of integration between the components may vary from one UE to another UE. Further, certain UEs may contain multiple instances of a component, such as multiple processors, memories, transceivers, transmitters, receivers, etc.

In Figure 16, processing circuitry 1601 may be configured to process computer instructions and data. Processing circuitry 1601 may be configured to implement any sequential state machine operative to execute machine instructions stored as machine-readable computer programs in the memory, such as one or more hardware-implemented state machines (e.g., in discrete logic, FPGA, ASIC, etc.); programmable logic together with appropriate firmware; one or more stored program, general-purpose processors, such as a microprocessor or Digital Signal Processor (DSP), together with appropriate software; or any combination of the above. For example, the processing circuitry 1601 may include two central processing units (CPUs). Data may be information in a form suitable for use by a computer.

In the depicted embodiment, input/output interface 1605 may be configured to provide a communication interface to an input device, output device, or input and output device. UE 1600 may be configured to use an output device via input/output interface 1605. An output device may use the same type of interface port as an input device. For example, a USB port may be used to provide input to and output from UE 1600. The output device may be a speaker, a sound card, a video card, a display, a monitor, a printer, an actuator, an emitter, a smartcard, another output device, or any combination thereof. UE 1600 may be configured to use an input device via input/output interface 1605 to allow a user to capture information into UE 1600. The input device may include a touch-sensitive or presence-sensitive display, a camera (e.g., a digital camera, a digital video camera, a web camera, etc.), a microphone, a sensor, a mouse, a trackball, a directional pad, a trackpad, a scroll wheel, a smartcard, and the like. The presence-sensitive display may include a capacitive or resistive touch sensor to sense input from a user. A sensor may be, for instance, an accelerometer, a gyroscope, a tilt sensor, a force sensor, a magnetometer, an optical sensor, a proximity sensor, another like sensor, or any combination thereof. For example, the input device may be an accelerometer, a magnetometer, a digital camera, a microphone, and an optical sensor.

In Figure 16, RF interface 1609 may be configured to provide a communication interface to RF components such as a transmitter, a receiver, and an antenna. Network connection interface 1611 may be configured to provide a communication interface to network 1643a. Network 1643a may encompass wired and/or wireless networks such as a local-area network (LAN), a wide-area network (WAN), a computer network, a wireless network, a telecommunications network, another like network or any combination thereof. For example, network 1643a may comprise a Wi-Fi network. Network connection interface 1611 may be configured to include a receiver and a transmitter interface used to communicate with one or more other devices over a communication network according to one or more communication protocols, such as Ethernet, TCP/IP, SONET, ATM, or the like. Network connection interface 1611 may implement receiver and transmitter functionality appropriate to the communication network links (e.g., optical, electrical, and the like). The transmitter and receiver functions may share circuit components, software or firmware, or alternatively may be implemented separately.

RAM 1617 may be configured to interface via bus 1602 to processing circuitry 1601 to provide storage or caching of data or computer instructions during the execution of software programs such as the operating system, application programs, and device drivers. ROM 1619 may be configured to provide computer instructions or data to processing circuitry 1601. For example, ROM 1619 may be configured to store invariant low-level system code or data for basic system functions such as basic input and output (I/O), startup, or reception of keystrokes from a keyboard that are stored in a non-volatile memory. Storage medium 1621 may be configured to include memory such as RAM, ROM, programmable read-only memory (PROM), erasable programmable read-only memory (EPROM), electrically erasable programmable read-only memory (EEPROM), magnetic disks, optical disks, floppy disks, hard disks, removable cartridges, or flash drives. In one example, storage medium 1621 may be configured to include operating system 1623, application program 1625 such as a web browser application, a widget or gadget engine or another application, and data file 1627. Storage medium 1621 may store, for use by UE 1600, any of a variety of various operating systems or combinations of operating systems.

Storage medium 1621 may be configured to include a number of physical drive units, such as redundant array of independent disks (RAID), floppy disk drive, flash memory, USB flash drive, external hard disk drive, thumb drive, pen drive, key drive, high-density digital versatile disc (HD-DVD) optical disc drive, internal hard disk drive, Blu-Ray optical disc drive, holographic digital data storage (HDDS) optical disc drive, external mini-dual in-line memory module (DIMM), synchronous dynamic random access memory (SDRAM), external micro-DIMM SDRAM, smartcard memory such as a subscriber identity module or a removable user identity (SIM/RUIM) module, other memory, or any combination thereof. Storage medium 1621 may allow UE 1600 to access computer-executable instructions, application programs or the like, stored on transitory or non-transitory memory media, to off-load data, or to upload data. An article of manufacture, such as one utilizing a communication system may be tangibly embodied in storage medium 1621, which may comprise a device readable medium.

In Figure 16, processing circuitry 1601 may be configured to communicate with network 1643b using communication subsystem 1631. Network 1643a and network 1643b may be the same network or networks or different network or networks. Communication subsystem 1631 may be configured to include one or more transceivers used to communicate with network 1643b. For example, communication subsystem 1631 may be configured to include one or more transceivers used to communicate with one or more remote transceivers of another device capable of wireless communication such as another WD, UE, or base station of a radio access network (RAN) according to one or more communication protocols, such as IEEE 802.11, CDMA, WCDMA, GSM, LTE, UTRAN, WiMax, or the like. Each transceiver may include transmitter 1633 and/or receiver 1635 to implement transmitter or receiver functionality, respectively, appropriate to the RAN links (e.g., frequency allocations and the like). Further, transmitter 1633 and receiver 1635 of each transceiver may share circuit components, software or firmware, or alternatively may be implemented separately.

In the illustrated embodiment, the communication functions of communication subsystem 1631 may include data communication, voice communication, multimedia communication, short-range communications such as Bluetooth, near-field communication, location-based communication such as the use of the global positioning system (GPS) to determine a location, another like communication function, or any combination thereof. For example, communication subsystem 1631 may include cellular communication, Wi-Fi communication, Bluetooth communication, and GPS communication. Network 1643b may encompass wired and/or wireless networks such as a local-area network (LAN), a wide-area network (WAN), a computer network, a wireless network, a telecommunications network, another like network or any combination thereof. For example, network 1643b may be a cellular network, a Wi-Fi network, and/or a near-field network. Power source 1613 may be configured to provide alternating current (AC) or direct current (DC) power to components of UE 1600.

The features, benefits and/or functions described herein may be implemented in one of the components of UE 1600 or partitioned across multiple components of UE 1600. Further, the features, benefits, and/or functions described herein may be implemented in any combination of hardware, software or firmware. In one example, communication subsystem 1631 may be configured to include any of the components described herein. Further, processing circuitry 1601 may be configured to communicate with any of such components over bus 1602. In another example, any of such components may be represented by program instructions stored in memory that when executed by processing circuitry 1601 perform the corresponding functions described herein. In another example, the functionality of any of such components may be partitioned between processing circuitry 1601 and communication subsystem 1631. In another example, the non-computationally intensive functions of any of such components may be implemented in software or firmware and the computationally intensive functions may be implemented in hardware.

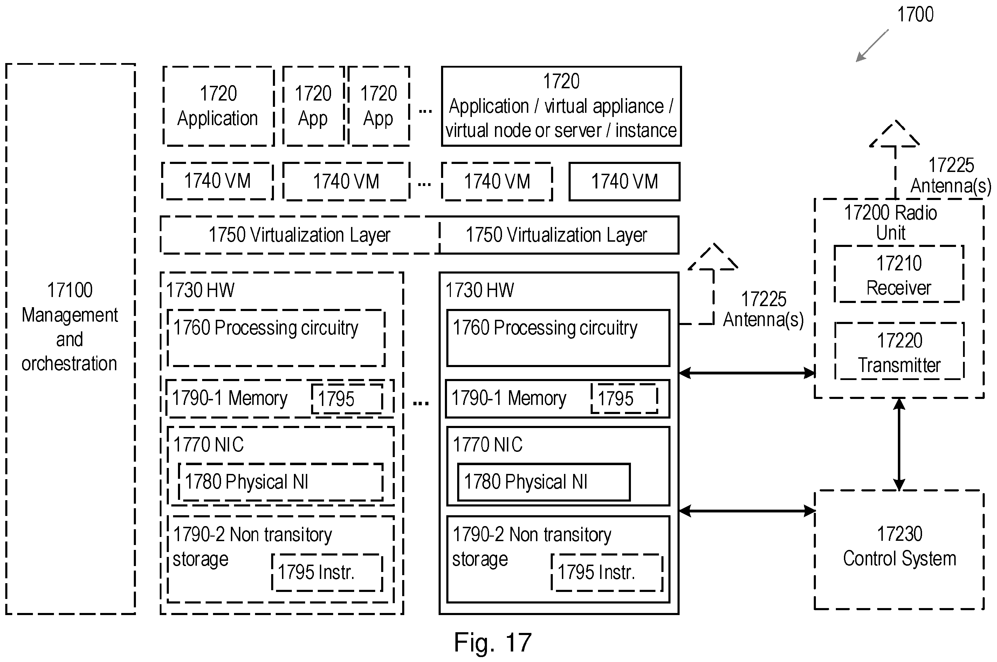

Figure 17 is a schematic block diagram illustrating a virtualization environment 1700 in which functions implemented by some embodiments may be virtualized. In the present context, virtualizing means creating virtual versions of apparatuses or devices which may include virtualizing hardware platforms, storage devices and networking resources. As used herein, virtualization can be applied to a node (e.g., a virtualized base station or a virtualized radio access node) or to a device (e.g., a UE, a wireless device or any other type of communication device) or components thereof and relates to an implementation in which at least a portion of the functionality is implemented as one or more virtual components (e.g., via one or more applications, components, functions, virtual machines or containers executing on one or more physical processing nodes in one or more networks).

In some embodiments, some or all of the functions described herein may be implemented as virtual components executed by one or more virtual machines implemented in one or more virtual environments 1700 hosted by one or more of hardware nodes 1730. Further, in embodiments in which the virtual node is not a radio access node or does not require radio connectivity (e.g., a core network node), then the network node may be entirely virtualized.

The functions may be implemented by one or more applications 1720 (which may alternatively be called software instances, virtual appliances, network functions, virtual nodes, virtual network functions, etc.) operative to implement some of the features, functions, and/or benefits of some of the embodiments disclosed herein. Applications 1720 are run in virtualization environment 1700 which provides hardware 1730 comprising processing circuitry 1760 and memory 1790. Memory 1790 contains instructions 1795 executable by processing circuitry 1760 whereby application 1720 is operative to provide one or more of the features, benefits, and/or functions disclosed herein.

Virtualization environment 1700, comprises general-purpose or special-purpose network hardware devices 1730 comprising a set of one or more processors or processing circuitry 1760, which may be commercial off-the-shelf (COTS) processors, dedicated Application Specific Integrated Circuits (ASICs), or any other type of processing circuitry including digital or analog hardware components or special purpose processors. Each hardware device may comprise memory 1790-1 which may be non-persistent memory for temporarily storing instructions 1795 or software executed by processing circuitry 1760. Each hardware device may comprise one or more network interface controllers (NICs) 1770, also known as network interface cards, which include physical network interface 1780. Each hardware device may also include non-transitory, persistent, machine-readable storage media 1790-2 having stored therein software 1795 and/or instructions executable by processing circuitry 1760. Software 1795 may include any type of software including software for instantiating one or more virtualization layers 1750 (also referred to as hypervisors), software to execute virtual machines 1740 as well as software allowing it to execute functions, features and/or benefits described in relation with some embodiments described herein.

Virtual machines 1740, comprise virtual processing, virtual memory, virtual networking or interface and virtual storage, and may be run by a corresponding virtualization layer 1750 or hypervisor. Different embodiments of the instance of virtual appliance 1720 may be implemented on one or more of virtual machines 1740, and the implementations may be made in different ways.

During operation, processing circuitry 1760 executes software 1795 to instantiate the hypervisor or virtualization layer 1750, which may sometimes be referred to as a virtual machine monitor (VMM).

Virtualization layer 1750 may present a virtual operating platform that appears like networking hardware to virtual machine 1740.

As shown in Figure 17, hardware 1730 may be a standalone network node with generic or specific components. Hardware 1730 may comprise antenna 17225 and may implement some functions via virtualization. Alternatively, hardware 1730 may be part of a larger cluster of hardware (e.g. such as in a data center or customer premise equipment (CPE)) where many hardware nodes work together and are managed via management and orchestration (MANO) 17100, which, among others, oversees lifecycle management of applications 1720.

Virtualization of the hardware is in some contexts referred to as network function virtualization (NFV). NFV may be used to consolidate many network equipment types onto industry standard high volume server hardware, physical switches, and physical storage, which can be located in data centers, and customer premise equipment.

In the context of NFV, virtual machine 1740 may be a software implementation of a physical machine that runs programs as if they were executing on a physical, non-virtualized machine. Each of virtual machines 1740, and that part of hardware 1730 that executes that virtual machine, be it hardware dedicated to that virtual machine and/or hardware shared by that virtual machine with others of the virtual machines 1740, forms a separate virtual network elements (VNE).

Still in the context of NFV, Virtual Network Function (VNF) is responsible for handling specific network functions that run in one or more virtual machines 1740 on top of hardware networking infrastructure 1730 and corresponds to application 1720 in Figure 17.

In some embodiments, one or more radio units 17200 that each include one or more transmitters 17220 and one or more receivers 17210 may be coupled to one or more antennas 17225. Radio units 17200 may communicate directly with hardware nodes 1730 via one or more appropriate network interfaces and may be used in combination with the virtual components to provide a virtual node with radio capabilities, such as a radio access node or a base station.

In some embodiments, some signaling can be effected with the use of control system 17230 which may alternatively be used for communication between the hardware nodes 1730 and radio units 17200.

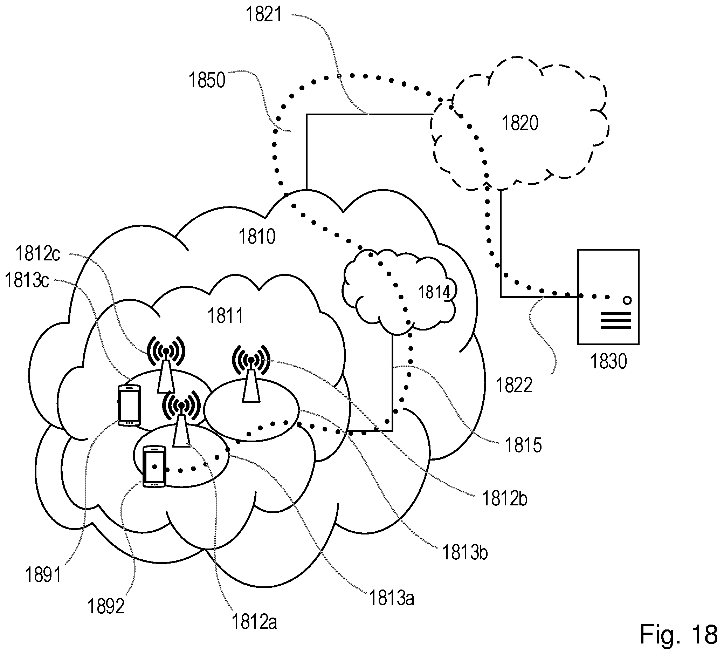

With reference to Figure 18, in accordance with an embodiment, a communication system includes telecommunication network 1810, such as a 3GPP-type cellular network, which comprises access network 1811, such as a radio access network, and core network 1814. Access network 1811 comprises a plurality of base stations 1812a, 1812b, 1812c, such as NBs, eNBs, gNBs or other types of wireless access points, each defining a corresponding coverage area 1813a, 1813b, 1813c. Each base station 1812a, 1812b, 1812c is connectable to core network 1814 over a wired or wireless connection 1815. A first UE 1891 located in coverage area 1813c is configured to wirelessly connect to, or be paged by, the corresponding base station 1812c. A second UE 1892 in coverage area 1813a is wirelessly connectable to the corresponding base station 1812a. While a plurality of UEs 1891, 1892 are illustrated in this example, the disclosed embodiments are equally applicable to a situation where a sole UE is in the coverage area or where a sole UE is connecting to the corresponding base station 1812.

Telecommunication network 1810 is itself connected to host computer 1830, which may be embodied in the hardware and/or software of a standalone server, a cloud-implemented server, a distributed server or as processing resources in a server farm. Host computer 1830 may be under the ownership or control of a service provider, or may be operated by the service provider or on behalf of the service provider. Connections 1821 and 1822 between telecommunication network 1810 and host computer 1830 may extend directly from core network 1814 to host computer 1830 or may go via an optional intermediate network 1820. Intermediate network 1820 may be one of, or a combination of more than one of, a public, private or hosted network; intermediate network 1820, if any, may be a backbone network or the Internet; in particular, intermediate network 1820 may comprise two or more sub-networks (not shown).

The communication system of Figure 18 as a whole enables connectivity between the connected UEs 1891, 1892 and host computer 1830. The connectivity may be described as an over-the-top (OTT) connection 1850. Host computer 1830 and the connected UEs 1891, 1892 are configured to communicate data and/or signaling via OTT connection 1850, using access network 1811, core network 1814, any intermediate network 1820 and possible further infrastructure (not shown) as intermediaries. OTT connection 1850 may be transparent in the sense that the participating communication devices through which OTT connection 1850 passes are unaware of routing of uplink and downlink communications. For example, base station 1812 may not or need not be informed about the past routing of an incoming downlink communication with data originating from host computer 1830 to be forwarded (e.g., handed over) to a connected UE 1891. Similarly, base station 1812 need not be aware of the future routing of an outgoing uplink communication originating from the UE 1891 towards the host computer 1830.

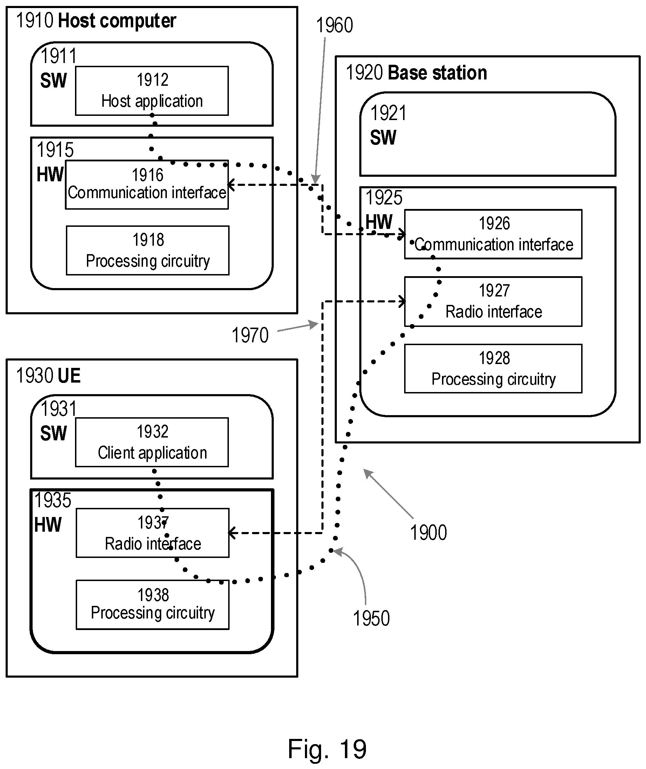

Example implementations, in accordance with an embodiment, of the UE, base station and host computer discussed in the preceding paragraphs will now be described with reference to Figure 19. In communication system 1900, host computer 1910 comprises hardware 1915 including communication interface 1916 configured to set up and maintain a wired or wireless connection with an interface of a different communication device of communication system 1900. Host computer 1910 further comprises processing circuitry 1918, which may have storage and/or processing capabilities. In particular, processing circuitry 1918 may comprise one or more programmable processors, application-specific integrated circuits, field programmable gate arrays or combinations of these (not shown) adapted to execute instructions. Host computer 1910 further comprises software 1911, which is stored in or accessible by host computer 1910 and executable by processing circuitry 1918. Software 1911 includes host application 1912. Host application 1912 may be operable to provide a service to a remote user, such as UE 1930 connecting via OTT connection 1950 terminating at UE 1930 and host computer 1910. In providing the service to the remote user, host application 1912 may provide user data which is transmitted using OTT connection 1950.

Communication system 1900 further includes base station 1920 provided in a telecommunication system and comprising hardware 1925 enabling it to communicate with host computer 1910 and with UE 1930. Hardware 1925 may include communication interface 1926 for setting up and maintaining a wired or wireless connection with an interface of a different communication device of communication system 1900, as well as radio interface 1927 for setting up and maintaining at least wireless connection 1970 with UE 1930 located in a coverage area (not shown in Figure 19) served by base station 1920. Communication interface 1926 may be configured to facilitate connection 1960 to host computer 1910. Connection 1960 may be direct or it may pass through a core network (not shown in Figure 19) of the telecommunication system and/or through one or more intermediate networks outside the telecommunication system. In the embodiment shown, hardware 1925 of base station 1920 further includes processing circuitry 1928, which may comprise one or more programmable processors, application-specific integrated circuits, field programmable gate arrays or combinations of these (not shown) adapted to execute instructions. Base station 1920 further has software 1921 stored internally or accessible via an external connection.

Communication system 1900 further includes UE 1930 already referred to. Its hardware 1935 may include radio interface 1937 configured to set up and maintain wireless connection 1970 with a base station serving a coverage area in which UE 1930 is currently located. Hardware 1935 of UE 1930 further includes processing circuitry 1938, which may comprise one or more programmable processors, application-specific integrated circuits, field programmable gate arrays or combinations of these (not shown) adapted to execute instructions. UE 1930 further comprises software 1931, which is stored in or accessible by UE 1930 and executable by processing circuitry 1938. Software 1931 includes client application 1932. Client application 1932 may be operable to provide a service to a human or non-human user via UE 1930, with the support of host computer 1910. In host computer 1910, an executing host application 1912 may communicate with the executing client application 1932 via OTT connection 1950 terminating at UE 1930 and host computer 1910. In providing the service to the user, client application 1932 may receive request data from host application 1912 and provide user data in response to the request data. OTT connection 1950 may transfer both the request data and the user data. Client application 1932 may interact with the user to generate the user data that it provides.

It is noted that host computer 1910, base station 1920 and UE 1930 illustrated in Figure 19 may be similar or identical to host computer 1830, one of base stations 1812a, 1812b, 1812c and one of UEs 1891, 1892 of Figure 18, respectively. This is to say, the inner workings of these entities may be as shown in Figure 19 and independently, the surrounding network topology may be that of Figure 18.

In Figure 19, OTT connection 1950 has been drawn abstractly to illustrate the communication between host computer 1910 and UE 1930 via base station 1920, without explicit reference to any intermediary devices and the precise routing of messages via these devices. Network infrastructure may determine the routing, which it may be configured to hide from UE 1930 or from the service provider operating host computer 1910, or both. While OTT connection 1950 is active, the network infrastructure may further take decisions by which it dynamically changes the routing (e.g., on the basis of load balancing consideration or reconfiguration of the network).

Wireless connection 1970 between UE 1930 and base station 1920 is in accordance with the teachings of the embodiments described throughout this disclosure. One or more of the various embodiments improve the performance of OTT services provided to UE 1930 using OTT connection 1950, in which wireless connection 1970 forms the last segment.

A measurement procedure may be provided for the purpose of monitoring data rate, latency and other factors on which the one or more embodiments improve. There may further be an optional network functionality for reconfiguring OTT connection 1950 between host computer 1910 and UE 1930, in response to variations in the measurement results. The measurement procedure and/or the network functionality for reconfiguring OTT connection 1950 may be implemented in software 1911 and hardware 1915 of host computer 1910 or in software 1931 and hardware 1935 of UE 1930, or both. In embodiments, sensors (not shown) may be deployed in or in association with communication devices through which OTT connection 1950 passes; the sensors may participate in the measurement procedure by supplying values of the monitored quantities exemplified above, or supplying values of other physical quantities from which software 1911, 1931 may compute or estimate the monitored quantities. The reconfiguring of OTT connection 1950 may include message format, retransmission settings, preferred routing etc.; the reconfiguring need not affect base station 1920, and it may be unknown or imperceptible to base station 1920. Such procedures and functionalities may be known and practiced in the art. In certain embodiments, measurements may involve proprietary UE signaling facilitating host computer 1910's measurements of throughput, propagation times, latency and the like. The measurements may be implemented in that software 1911 and 1931 causes messages to be transmitted, in particular empty or 'dummy' messages, using OTT connection 1950 while it monitors propagation times, errors etc.

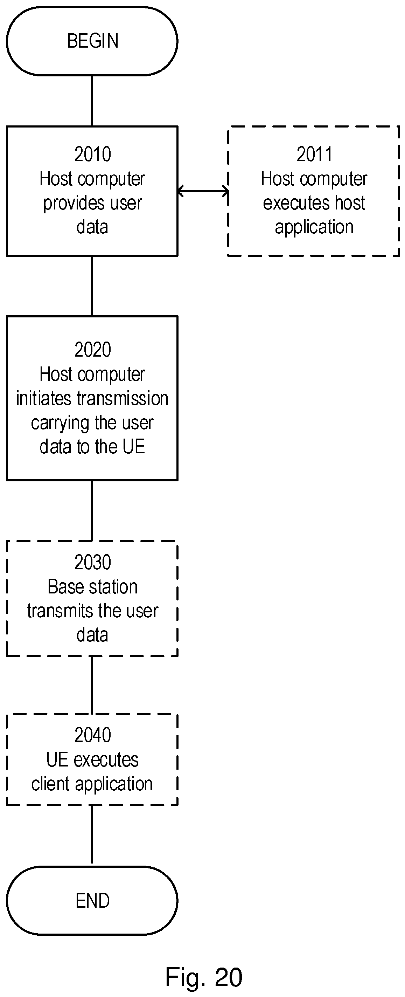

Figure 20 is a flowchart illustrating a method implemented in a communication system, in accordance with one embodiment. The communication system includes a host computer, a base station and a UE which may be those described with reference to Figures 18 and 19. For simplicity of the present disclosure, only drawing references to Figure 20 will be included in this section. In step 2010, the host computer provides user data. In substep 2011 (which may be optional) of step 2010, the host computer provides the user data by executing a host application. In step 2020, the host computer initiates a transmission carrying the user data to the UE. In step 2030 (which may be optional), the base station transmits to the UE the user data which was carried in the transmission that the host computer initiated, in accordance with the teachings of the embodiments described throughout this disclosure. In step 2040 (which may also be optional), the UE executes a client application associated with the host application executed by the host computer.

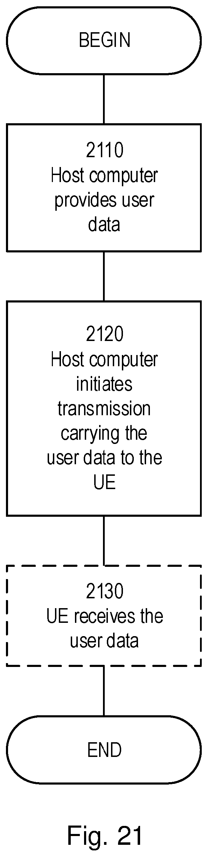

Figure 21 is a flowchart illustrating a method implemented in a communication system, in accordance with one embodiment. The communication system includes a host computer, a base station and a UE which may be those described with reference to Figures 18 and 19. For simplicity of the present disclosure, only drawing references to Figure 21 will be included in this section. In step 2110 of the method, the host computer provides user data. In an optional substep (not shown) the host computer provides the user data by executing a host application. In step 2120, the host computer initiates a transmission carrying the user data to the UE. The transmission may pass via the base station, in accordance with the teachings of the embodiments described throughout this disclosure. In step 2130 (which may be optional), the UE receives the user data carried in the transmission.

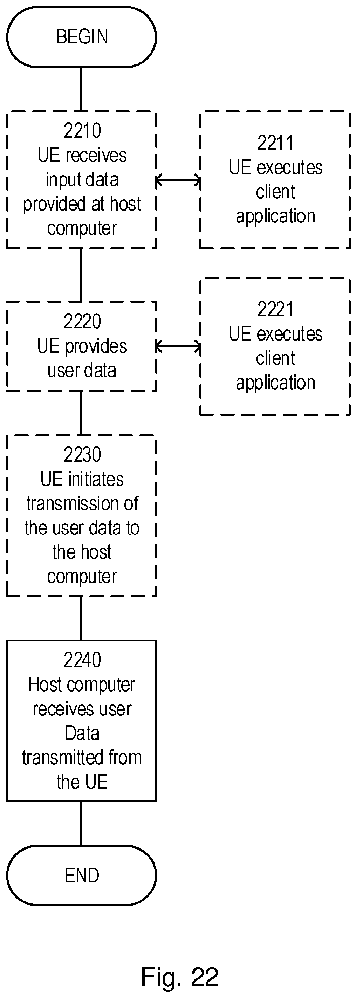

Figure 22 is a flowchart illustrating a method implemented in a communication system, in accordance with one embodiment. The communication system includes a host computer, a base station and a UE which may be those described with reference to Figures 18 and 19. For simplicity of the present disclosure, only drawing references to Figure 22 will be included in this section. In step 2210 (which may be optional), the UE receives input data provided by the host computer. Additionally or alternatively, in step 2220, the UE provides user data. In substep 2221 (which may be optional) of step 2220, the UE provides the user data by executing a client application. In substep 2211 (which may be optional) of step 2210, the UE executes a client application which provides the user data in reaction to the received input data provided by the host computer. In providing the user data, the executed client application may further consider user input received from the user. Regardless of the specific manner in which the user data was provided, the UE initiates, in substep 2230 (which may be optional), transmission of the user data to the host computer. In step 2240 of the method, the host computer receives the user data transmitted from the UE, in accordance with the teachings of the embodiments described throughout this disclosure.

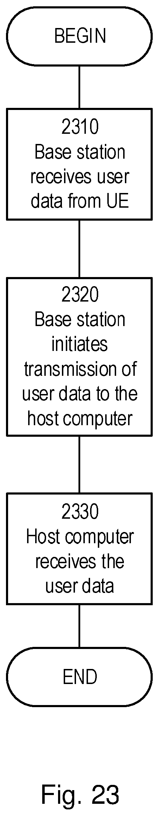

Figure 23 is a flowchart illustrating a method implemented in a communication system, in accordance with one embodiment. The communication system includes a host computer, a base station and a UE which may be those described with reference to Figures 18 and 19. For simplicity of the present disclosure, only drawing references to Figure 23 will be included in this section. In step 2310 (which may be optional), in accordance with the teachings of the embodiments described throughout this disclosure, the base station receives user data from the UE. In step 2320 (which may be optional), the base station initiates transmission of the received user data to the host computer. In step 2330 (which may be optional), the host computer receives the user data carried in the transmission initiated by the base station.

The methods of the present disclosure may be implemented in hardware, or as software modules running on one or more processors. The methods may also be carried out according to the instructions of a computer program, and the present disclosure also provides a computer readable medium having stored thereon a program for carrying out any of the methods described herein. A computer program embodying the disclosure may be stored on a computer readable medium, or it could, for example, be in the form of a signal such as a downloadable data signal provided from an Internet website, or it could be in any other form.

It should be noted that the above-mentioned examples illustrate rather than limit the disclosure, and that those skilled in the art will be able to design many alternative embodiments without departing from the scope of the appended claims. The word "comprising" does not exclude the presence of elements or steps other than those listed in a claim, "a" or "an" does not exclude a plurality, and a single processor or other unit may fulfil the functions of several units recited in the claims. Any reference signs in the claims shall not be construed so as to limit their scope.

The following are certain enumerated embodiments further illustrating various aspects the disclosed subject matter.
1. A computer implemented method (200) for managing Conditional Handover of a User Equipment, UE, in a cellular communication network, wherein the communication network comprises a plurality of radio resources, each radio resource defining a dimension of a multidimensional radio space over which the communication network extends, the method comprising:
   receiving a report of radio resource measurements performed by a UE (210);
   assigning a current radio location of the UE to a radio zone of the communication network on the basis of the contents of the report (220), wherein a radio zone comprises a region of the multidimensional radio space over which the communication network extends that is defined by a particular combination of radio field characteristics, and wherein each cell of the communication network comprises a plurality of radio zones (220a);
   updating, in a database, a trajectory of the UE through the radio space of the communication network with the radio zone to which the current radio location of the UE is assigned (230);
   using the updated trajectory to calculate a probability of Handover of the UE to neighbor cells of the current serving cell of the UE (240); and
   initiating a Conditional Handover procedure for Handover of the UE to neighbor cells for which the probability of Handover is above a first Handover threshold value (250).
2. A method according to embodiment 1, further comprising:
   updating the calculated probability of Handover of the UE to neighbor cells of the current serving cell of the UE on the basis of a newly received report of radio resource measurements performed by a UE (360); and
   cancelling the Conditional handover procedure for Handover of the UE to neighbor cells for which the probability of Handover has fallen below a second Handover threshold value (370).
3. A method according to embodiment 1 or 2, wherein assigning a current radio location of the UE to a radio zone of the communication network on the basis of the contents of the report comprises:
   classifying a vector of radio resource measurements contained in the report into a radio zone (320i); and
   assigning a current radio location of the UE to the radio zone into which the vector is classified (320ii).
4. A method according to any one of the preceding embodiments, wherein updating, in a database, a trajectory of the UE through the radio space of the communication network with the radio zone to which the UE is assigned comprises:
   appending to the trajectory a tuple of time stamp, radio zone identifier and transition identifier for a transition from the previous radio zone of the trajectory (330i).
5. A method according to any one of the preceding embodiments, wherein updating, in a database, a trajectory of the UE through the radio space of the communication network with the radio zone to which the UE is assigned comprises:
   truncating the updated trajectory over a sliding window (330ii);
   comparing the truncated trajectory to each of a candidate set of frequently occurring trajectories (330iii); and
   for any trajectory of the candidate set of frequently occurring trajectories for which the truncated trajectory is a match, incrementing a frequency counter of the trajectory (330iv).
6. A method according to any one of the preceding embodiments, further comprising:
   classifying a rate of change of the radio resource environment of the UE on the basis of the updated trajectory (335).
7. A method according to embodiment 6, wherein classifying a rate of change of the radio resource environment of the UE on the basis of the updated trajectory comprises:
   calculating a distance traversed by the UE over the multidimensional radio space on the basis of the radio zones present in the UE's updated trajectory over a sliding window (335i);
   dividing the calculated distance by a time during which the calculated distance was traversed by the UE to obtain a rate of change of the radio resource environment of the UE (335ii); and
   classifying the obtained rate of change into one of a plurality of classifications (335iii).
8. A method according to any one of the preceding embodiments, wherein using the updated trajectory to calculate a probability of Handover of the UE to neighbor cells of the current serving cell of the UE comprises:
   predicting a next radio zone through which the UE will pass on the basis of the updated trajectory of the UE and a record of trajectories previously traversed by UEs accessing the communication network (340i).
9. A method according to embodiment 8, wherein predicting a next radio zone through which the UE will pass on the basis of the updated trajectory of the UE and a record of trajectories previously traversed by UEs accessing the communication network comprises:
   using a supervised machine learning algorithm to predict the next radio zone through which the UE will pass on the basis of the updated trajectory of the UE and a record of trajectories previously traversed by UEs accessing the communication network (340ia).
10. A method according to embodiment 8 or 9, wherein predicting a next radio zone through which the UE will pass on the basis of the updated trajectory of the UE and a record of trajectories previously traversed by UEs accessing the communication network comprises:
   comparing the updated trajectory of the UE to each of a candidate set of frequently occurring trajectories over a sliding window (340ib); and
   for each trajectory of the candidate set of frequently occurring trajectories for which the updated trajectory is a match, calculating a conditional probability of the UE transitioning to the next radio zone in the trajectory on the basis of a frequency with which UEs accessing the network have followed that trajectory (340ic).
11. A method according to any one of embodiments 8 to 10, wherein using the updated trajectory to calculate a probability of Handover of the UE to neighbor cells of the current serving cell of the UE further comprises:
   identifying next radio zones through which the UE is predicted to transition which correspond to a neighbor cell of the current serving cell of the UE (340ii); and
   for the neighbor cells to which the identified next radio zones correspond, calculating a probability of Handover to the neighbor cell on the basis of conditional probabilities of the UE transitioning to any radio zone that corresponds to the identified cell (340iii).
12. A method according to any one of the preceding embodiments, wherein initiating a Conditional Handover procedure for Handover of the UE to neighbor cells for which the probability of Handover is above a first Handover threshold value comprises:
   for a neighbor cell for which the probability of Handover is above the first Handover threshold value:
   generating Handover parameters for Handover of the UE to the neighbor cell (350i);
   sending a Conditional Handover Request to the neighbor cell (350ii); and
   sending the generated Handover parameters to the serving cell of the UE for forwarding to the UE (350iii).
13. A method according to embodiment 12, wherein, for a neighbor cell for which the probability of Handover is above the first Handover threshold value, generating Handover parameters for Handover of the UE to the neighbor cell comprises:
   estimating a probability that the UE will remain in the neighbor cell for a threshold sojourn time (350ia); and
   generating at least one of a Handover margin or a Handover Time to Trigger on the basis of the estimated probability (350ib).
14. A method according to embodiment 12 or 13, when dependent on embodiment 6 or 7, wherein, for a neighbor cell for which the probability of Handover is above the first Handover threshold value, generating Handover parameters for Handover of the UE to the neighbor cell comprises:
   generating at least one of a Handover margin or a Handover Time to Trigger on the basis of a measure of a rate of change of the radio resource environment of the UE (350ib).
15. A method according to any one of embodiments 12 to 14, wherein, for a neighbor cell for which the probability of Handover is above the first Handover threshold value, generating Handover parameters for Handover of the UE to the neighbor cell comprises:
   increasing a Handover margin or a Handover Time to Trigger with at least one of (350ic):
   reducing rate of change of radio resource environment;
   reducing probability that the UE will remain in the neighbor cell for a threshold sojourn time.
16. A method according to any one of the preceding embodiments, further comprising:
   updating the first Handover threshold value according to at least one of (380):
   a Quality of Service requirement for the UE;
   availability of radio resources in neighbor cells of the current serving cell.
17. A method according to any one of the preceding embodiments, further comprising:
   updating a definition of radio zones on the basis of received reports of radio resource measurements performed by the UE (390).
18. A method according to embodiment 17, wherein updating a definition of radio zones comprises:
   adding vectors of measurements contained in received reports to a training data set (390i);
   applying a clustering algorithm to the training data set (390ii); and
   for clusters identified by the clustering algorithm:
      identifying a set of measurements that represent the radio field characteristics of the cluster (390iii); and
      defining a measurement envelope centered on the identified set of measurements as a radio zone (390iv).
19. A method according to embodiment 18, wherein applying a clustering algorithm comprises setting, as a clustering parameter, a physical cell identity, such that a probability that a Handover between cells is accompanied by a transition between radio zones is increased (390ii).
20. A method according to any one of the preceding embodiments, wherein the method is performed by a management node.
21. A method according to embodiment 20, wherein the management node is one of a core network node, network management center node, a network operations center node, or a Radio Access node.
22. A computer program product comprising a computer readable medium, the computer readable medium having computer readable code embodied therein, the computer readable code being configured such that, on execution by a suitable computer or processor, the computer or processor is caused to perform a method according to any one of embodiments 1 to 21.
23. A management node (1300) for managing Conditional Handover of a User Equipment, UE, in a cellular communication network, wherein the communication network comprises a plurality of radio resources, each radio resource defining a dimension of a multidimensional radio space over which the communication network extends, the management node comprising processing circuitry (1302) configured to:
   receive a report of radio resource measurements performed by a UE;
   assign a current radio location of the UE to a radio zone of the communication network on the basis of the contents of the report, wherein a radio zone comprises a region of the multidimensional radio space over which the communication network extends that is defined by a particular combination of radio field characteristics, and wherein each cell of the communication network comprises a plurality of radio zones;
   update, in a database, a trajectory of the UE through the radio space of the communication network with the radio zone to which the current radio location of the UE is assigned;
   use the updated trajectory to calculate a probability of Handover of the UE to neighbor cells of the current serving cell of the UE; and
   initiate a Conditional Handover procedure for Handover of the UE to neighbor cells for which the probability of Handover is above a first Handover threshold value.
24. A management node according to embodiment 23, wherein the processing circuitry is further configured to perform the steps of any one of embodiments 2 to 21.

## Claims

1. A computer implemented method (200) for managing Conditional Handover of a User Equipment, UE, in a cellular communication network, wherein the communication network comprises a plurality of radio resources, each radio resource defining a dimension of a multidimensional radio space over which the communication network extends, the method, performed by a management node, comprising:
receiving a report of radio resource measurements performed by a UE (210);
assigning a current radio location of the UE to a radio zone of the communication network on the basis of the contents of the report (220), wherein a radio zone comprises a region of the multidimensional radio space over which the communication network extends that is defined by a particular combination of radio field characteristics, and wherein each cell of the communication network comprises a plurality of radio zones (220a);
updating, in a database, a trajectory of the UE through the radio space of the communication network with the radio zone to which the current radio location of the UE is assigned (230);
using the updated trajectory to calculate a probability of Handover of the UE to neighbor cells of the current serving cell of the UE (240); and
initiating a Conditional Handover procedure for Handover of the UE to neighbor cells for which the probability of Handover is above a first Handover threshold value (250).

2. A method as claimed in claim 1, further comprising:
updating the calculated probability of Handover of the UE to neighbor cells of the current serving cell of the UE on the basis of a newly received report of radio resource measurements performed by a UE (360); and
cancelling the Conditional handover procedure for Handover of the UE to neighbor cells for which the probability of Handover has fallen below a second Handover threshold value (370).

3. A method as claimed in claim 1 or 2, wherein assigning a current radio location of the UE to a radio zone of the communication network on the basis of the contents of the report comprises:
classifying a vector of radio resource measurements contained in the report into a radio zone (320i); and
assigning a current radio location of the UE to the radio zone into which the vector is classified (320ii).

4. A method as claimed in any one of the preceding claims, wherein updating, in a database, a trajectory of the UE through the radio space of the communication network with the radio zone to which the UE is assigned comprises:
appending to the trajectory a tuple of time stamp, radio zone identifier and transition identifier for a transition from the previous radio zone of the trajectory (330i).

5. A method as claimed in any one of the preceding claims, wherein updating, in a database, a trajectory of the UE through the radio space of the communication network with the radio zone to which the UE is assigned comprises:
truncating the updated trajectory over a sliding window (330ii);
comparing the truncated trajectory to each of a candidate set of frequently occurring trajectories (330iii); and
for any trajectory of the candidate set of frequently occurring trajectories for which the truncated trajectory is a match, incrementing a frequency counter of the trajectory (330iv).

6. A method as claimed in any one of the preceding claims, further comprising:
classifying a rate of change of the radio resource environment of the UE on the basis of the updated trajectory (335).

7. A method as claimed in claim 6, wherein classifying a rate of change of the radio resource environment of the UE on the basis of the updated trajectory comprises:
calculating a distance traversed by the UE over the multidimensional radio space on the basis of the radio zones present in the UE's updated trajectory over a sliding window (335i);
dividing the calculated distance by a time during which the calculated distance was traversed by the UE to obtain a rate of change of the radio resource environment of the UE (335ii); and
classifying the obtained rate of change into one of a plurality of classifications (335iii).

8. A method as claimed in any one of the preceding claims, wherein using the updated trajectory to calculate a probability of Handover of the UE to neighbor cells of the current serving cell of the UE comprises:
predicting a next radio zone through which the UE will pass on the basis of the updated trajectory of the UE and a record of trajectories previously traversed by UEs accessing the communication network (340i).

9. A method as claimed in claim 8, wherein predicting a next radio zone through which the UE will pass on the basis of the updated trajectory of the UE and a record of trajectories previously traversed by UEs accessing the communication network comprises:
comparing the updated trajectory of the UE to each of a candidate set of frequently occurring trajectories over a sliding window (340ib); and
for each trajectory of the candidate set of frequently occurring trajectories for which the updated trajectory is a match, calculating a conditional probability of the UE transitioning to the next radio zone in the trajectory on the basis of a frequency with which UEs accessing the network have followed that trajectory (340ic).

10. A method as claimed in claim 8 or 9, wherein using the updated trajectory to calculate a probability of Handover of the UE to neighbor cells of the current serving cell of the UE further comprises:
identifying next radio zones through which the UE is predicted to transition which correspond to a neighbor cell of the current serving cell of the UE (340ii); and
for the neighbor cells to which the identified next radio zones correspond, calculating a probability of Handover to the neighbor cell on the basis of conditional probabilities of the UE transitioning to any radio zone that corresponds to the identified cell (340iii).

11. A method as claimed in any one of the preceding claims, wherein initiating a Conditional Handover procedure for Handover of the UE to neighbor cells for which the probability of Handover is above a first Handover threshold value comprises:
for a neighbor cell for which the probability of Handover is above the first Handover threshold value:
generating Handover parameters for Handover of the UE to the neighbor cell (350i);
sending a Conditional Handover Request to the neighbor cell (350ii); and
sending the generated Handover parameters to the serving cell of the UE for forwarding to the UE (350iii).

12. A method as claimed in claim 11, wherein, for a neighbor cell for which the probability of Handover is above the first Handover threshold value, generating Handover parameters for Handover of the UE to the neighbor cell comprises:
estimating a probability that the UE will remain in the neighbor cell for a threshold sojourn time (350ia); and
generating at least one of a Handover margin or a Handover Time to Trigger on the basis of the estimated probability (350ib).

13. A method as claimed in claim 11 or 12, when dependent on claim 6 or 7, wherein, for a neighbor cell for which the probability of Handover is above the first Handover threshold value, generating Handover parameters for Handover of the UE to the neighbor cell comprises:
generating at least one of a Handover margin or a Handover Time to Trigger on the basis of a measure of a rate of change of the radio resource environment of the UE (350ib).

14. A method as claimed in any one of claims 11 to 13, wherein, for a neighbor cell for which the probability of Handover is above the first Handover threshold value, generating Handover parameters for Handover of the UE to the neighbor cell comprises:
increasing a Handover margin or a Handover Time to Trigger with at least one of (350ic):
reducing rate of change of radio resource environment;
reducing probability that the UE will remain in the neighbor cell for a threshold sojourn time.

15. A method as claimed in any one of the preceding claims, further comprising:
updating a definition of radio zones on the basis of received reports of radio resource measurements performed by the UE (390).

16. A computer program product comprising a computer readable medium, the computer readable medium having computer readable code embodied therein, the computer readable code being configured such that, on execution by a processor of a management node, the management node is caused to perform a method as claimed in any one of claims 1 to 15.

17. A management node (1300) for managing Conditional Handover of a User Equipment, UE, in a cellular communication network, wherein the communication network comprises a plurality of radio resources, each radio resource defining a dimension of a multidimensional radio space over which the communication network extends, the management node comprising processing circuitry (1302) configured to:
receive a report of radio resource measurements performed by a UE;
assign a current radio location of the UE to a radio zone of the communication network on the basis of the contents of the report, wherein a radio zone comprises a region of the multidimensional radio space over which the communication network extends that is defined by a particular combination of radio field characteristics, and wherein each cell of the communication network comprises a plurality of radio zones;
update, in a database, a trajectory of the UE through the radio space of the communication network with the radio zone to which the current radio location of the UE is assigned;
use the updated trajectory to calculate a probability of Handover of the UE to neighbor cells of the current serving cell of the UE; and
initiate a Conditional Handover procedure for Handover of the UE to neighbor cells for which the probability of Handover is above a first Handover threshold value.

18. A management node as claimed in claim 17, wherein the processing circuitry is further configured to perform the steps of any one of claims 2 to 15.

## Patentansprüche

1. Computerimplementiertes Verfahren (200) zur Verwaltung von bedingtem Handover einer Benutzereinrichtung, UE, in einem zellularen Kommunikationsnetzwerk, wobei das Kommunikationsnetzwerk eine Mehrzahl von Funkressourcen umfasst, jede Funkressource eine Dimension eines mehrdimensionalen Funkraums definiert, über den sich das Kommunikationsnetzwerk erstreckt, wobei das Verfahren, das von einem Verwaltungsknoten durchgeführt wird, Folgendes umfasst:
Empfangen eines Berichts von Funkressourcenmessungen, die von einer UE durchgeführt wurden (210);
Zuordnen eines aktuellen Funkstandorts der UE zu einer Funkzone des Kommunikationsnetzwerks auf der Basis der Inhalte des Berichts (220), wobei eine Funkzone eine Region des mehrdimensionalen Funkraums, über den sich das Kommunikationsnetzwerk erstreckt, umfasst, die durch eine spezifische Kombination von Funkfeldcharakteristiken definiert ist, und wobei jede Zelle des Kommunikationsnetzwerks eine Mehrzahl von Funkzonen umfasst (220a);
Aktualisieren einer Trajektorie der UE durch den Funkraum des Kommunikationsnetzwerks in einer Datenbank mit der Funkzone, der der aktuelle Standort der UE zugeordnet ist (230);
Verwenden der aktualisierten Trajektorie, um eine Wahrscheinlichkeit eines Handovers der UE zu Nachbarzellen der aktuellen bedienenden Zelle der UE zu berechnen (240); und
Initiieren einer Prozedur eines bedingten Handovers für ein Handover der UE zu Nachbarzellen, für die die Wahrscheinlichkeit des Handovers über einem ersten Handover-Schwellenwert liegt (250).

2. Verfahren nach Anspruch 1, ferner umfassend:
Aktualisieren der berechneten Wahrscheinlichkeit des Handovers der UE zu Nachbarzellen der aktuellen bedienenden Zelle der UE auf der Basis eines neu empfangenen Berichts von Funkressourcenmessungen, die von einer UE durchgeführt wurden (360); und
Abbrechen der Prozedur des bedingten Handovers für das Handover der UE zu Nachbarzellen, für die die Wahrscheinlichkeit des Handovers unter einen zweiten Handover-Schwellenwert abgefallen ist (370).

3. Verfahren nach Anspruch 1 oder 2, wobei das Zuordnen eines aktuellen Funkstandorts der UE zu einer Funkzone des Kommunikationsnetzwerks auf der Basis der Inhalte des Berichts Folgendes umfasst:
Klassifizieren eines Vektors von Funkressourcenmessungen, die in dem Bericht enthalten sind, in eine Funkzone (320i); und
Zuordnen eines aktuellen Funkstandorts der UE zu der Funkzone, in die der Vektor klassifiziert ist (320ii).

4. Verfahren nach einem der vorhergehenden Ansprüche, wobei das Aktualisieren einer Trajektorie der UE durch den Funkraum des Kommunikationsnetzwerks in einer Datenbank mit der Funkzone, der die UE zugeordnet ist, Folgendes umfasst:
Anhängen eines Tupels aus Zeitstempel, Funkzonenkennung und Übergangskennung für einen Übergang aus der vorherigen Funkzone der Trajektorie an die Trajektorie (330i).

5. Verfahren nach einem der vorhergehenden Ansprüche, wobei das Aktualisieren einer Trajektorie der UE durch den Funkraum des Kommunikationsnetzwerks in einer Datenbank mit der Funkzone, der die UE zugeordnet ist, Folgendes umfasst:
Kürzen der aktualisierten Trajektorie über ein Gleitfenster (330ii);
Vergleichen der gekürzten Trajektorie mit jeder eines Kandidatensatzes häufig vorkommender Trajektorien (330iii); und
für jede Trajektorie des Kandidatensatzes häufig vorkommender Trajektorien, für die die gekürzte Trajektorie übereinstimmt, Erhöhen eines Häufigkeitszählers der Trajektorie (330iv).

6. Verfahren nach einem der vorhergehenden Ansprüche, ferner umfassend:
Klassifizieren einer Änderungsrate der Funkressourcenumgebung der UE auf der Basis der aktualisierten Trajektorie (335).

7. Verfahren nach Anspruch 6, wobei das Klassifizieren einer Änderungsrate der Funkressourcenumgebung der UE auf der Basis der aktualisierten Trajektorie Folgendes umfasst:
Berechnen einer Distanz, die von der UE über den mehrdimensionalen Raum durchlaufen wird, auf der Basis der Funkzonen, die in der aktualisierten Trajektorie der UE über ein Gleitfenster vorhanden sind (335i);
Teilen der berechneten Distanz durch eine Zeit, während der die berechnete Distanz von der UE durchlaufen wurde, um eine Änderungsrate der Funkressourcenumgebung der UE zu erhalten (335ii); und
Klassifizieren der erhaltenen Änderungsrate in eine von einer Mehrzahl von Klassifikationen (335iii).

8. Verfahren nach einem der vorhergehenden Ansprüche, wobei das Verwenden der aktualisierten Trajektorie zum Berechnen einer Wahrscheinlichkeit eines Handovers der UE zu Nachbarzellen der aktuellen bedienenden Zelle der UE Folgendes umfasst:
Vorhersagen einer nächsten Funkzone, die die UE passieren wird, auf der Basis der aktualisierten Trajektorie der UE und einer Aufzeichnung von Trajektorien, die von UEs durchlaufen wurden, die auf das Kommunikationsnetzwerk zugreifen (340i).

9. Verfahren nach Anspruch 8, wobei das Vorhersagen einer nächsten Funkzone, die die UE passieren wird, auf der Basis der aktualisierten Trajektorie der UE und einer Aufzeichnung von Trajektorien, die von UEs durchlaufen wurden, die auf das Kommunikationsnetzwerk zugreifen, Folgendes umfasst:
Vergleichen der aktualisierten Trajektorie der UE mit jeder eines Kandidatensatzes häufig vorkommender Trajektorien über ein Gleitfenster (340ib); und
für jede Trajektorie des Kandidatensatzes häufig vorkommender Trajektorien, für die aktualisierte Trajektorie übereinstimmt, Berechnen einer bedingten Wahrscheinlichkeit für den Übergang der UE zu der nächsten Funkzone in der Trajektorie auf der Basis einer Häufigkeit, mit der UEs, die auf das Netzwerk zugreifen, dieser Trajektorie gefolgt sind (340ic).

10. Verfahren nach Anspruch 8 oder 9, wobei das Verwenden der aktualisierten Trajektorie zum Berechnen einer Wahrscheinlichkeit eines Handovers der UE zu Nachbarzellen der aktuellen bedienenden Zelle der UE ferner Folgendes umfasst:
Identifizieren der nächsten Funkzonen, die die UE voraussichtlich durchqueren wird und die einer Nachbarzelle der aktuellen bedienenden Zelle der UE entsprechen (340ii); und
für die Nachbarzellen, die den identifizierten nächsten Funkzellen entsprechen, Berechnen einer Wahrscheinlichkeit eines Handovers zu der Nachbarzelle auf der Basis von bedingten Wahrscheinlichkeiten für den Übergang der UE zu einer Funkzone, die der identifizierten Zelle entspricht (340iii).

11. Verfahren nach einem der vorhergehenden Ansprüche, wobei das Initiieren einer Prozedur eines bedingten Handovers für ein Handover der UE zu Nachbarzellen, für die die Wahrscheinlichkeit des Handovers über einem ersten Handover-Schwellenwert liegt, Folgendes umfasst:
für eine Nachbarzelle, für die die Wahrscheinlichkeit des Handovers über dem ersten Handover-Schwellenwert liegt:
Generieren von Handover-Parametern für das Handover der UE zu der Nachbarzelle (350i);
Senden einer Anforderung für ein bedingtes Handover an die Nachbarzelle (350ii); und
Senden der generierten Handover-Parameter an die bedienende Zelle der UE zur Weiterleitung an die UE (350iii).

12. Verfahren nach Anspruch 11, wobei das Generieren von Handover-Parametern für das Handover der UE zu der Nachbarzelle für eine Nachbarzelle, für die die Wahrscheinlichkeit des Handovers über dem ersten Handover-Schwellenwert liegt, Folgendes umfasst:
Schätzen einer Wahrscheinlichkeit, dass die UE für eine Schwellenverweilzeit in der Nachbarzelle bleibt (350ia); und
Generieren mindestens einer von einer Handover-Marge oder einer Handover-Zeit bis zum Auslösen auf der Basis der geschätzten Wahrscheinlichkeit (350ib).

13. Verfahren nach Anspruch 11 oder 12 bei Abhängigkeit von Anspruch 6 oder 7, wobei das Generieren von Handover-Parametern für das Handover der UE zu der Nachbarzelle für eine Nachbarzelle, für die die Wahrscheinlichkeit des Handovers über dem ersten Handover-Schwellenwert liegt, Folgendes umfasst:
Generieren mindestens einer von einer Handover-Marge oder einer Handover-Zeit bis zum Auslösen auf der Basis eines Maßes einer Änderungsrate der Funkressourcenumgebung der UE (350ib).

14. Verfahren nach einem der Ansprüche 11 bis 13, wobei das Generieren von Handover-Parametern für das Handover der UE zu der Nachbarzelle für eine Nachbarzelle, für die die Wahrscheinlichkeit des Handovers über dem ersten Handover-Schwellenwert liegt, Folgendes umfasst:
Erhöhen einer Handover-Marge oder einer Handover-Zeit bis zum Auslösen durch mindestens eines von Folgendem (350ic):
Reduzieren einer Änderungsrate der Funkressourcenumgebung;
Reduzieren einer Wahrscheinlichkeit, dass die UE für eine Schwellenverweilzeit in der Nachbarzelle bleibt.

15. Verfahren nach einem der vorhergehenden Ansprüche, ferner umfassend:
Aktualisieren einer Definition von Funkzonen auf der Basis empfangener Berichte von Funkressourcenmessungen, die von der UE durchgeführt wurden (390).

16. Computerprogrammprodukt, umfassend ein computerlesbares Medium, wobei das computerlesbare Medium computerlesbaren Code darauf enthalten aufweist, wobei der computerlesbare Code derart konfiguriert ist, dass bei Ausführung durch einen Prozessor eines Verwaltungsknotens der Verwaltungsknoten zum Durchführen des Verfahrens nach einem der Ansprüche 1 bis 15 veranlasst wird.

17. Verwaltungsknoten (1300) zum Verwalten von bedingtem Handover einer Benutzereinrichtung, UE, in einem zellularen Kommunikationsnetzwerk, wobei das Kommunikationsnetzwerk eine Mehrzahl von Funkressourcen umfasst, jede Funkressource eine Dimension eines mehrdimensionalen Funkraums definiert, über den sich das Kommunikationsnetzwerk erstreckt, wobei der Verwaltungsknoten Verarbeitungsschaltungsanordnung (1302) umfasst, die zu Folgendem konfiguriert ist:
Empfangen eines Berichts von Funkressourcenmessungen, die von einer UE durchgeführt wurden;
Zuordnen eines aktuellen Funkstandorts der UE zu einer Funkzone des Kommunikationsnetzwerks auf der Basis der Inhalte des Berichts, wobei eine Funkzone eine Region des mehrdimensionalen Funkraums, über den sich das Kommunikationsnetzwerk erstreckt, umfasst, die durch eine spezifische Kombination von Funkfeldcharakteristiken definiert ist, und wobei jede Zelle des Kommunikationsnetzwerks eine Mehrzahl von Funkzonen umfasst;
Aktualisieren einer Trajektorie der UE durch den Funkraum des Kommunikationsnetzwerks in einer Datenbank mit der Funkzone, der der aktuelle Standort der UE zugeordnet ist;
Verwenden der aktualisierten Trajektorie, um eine Wahrscheinlichkeit eines Handovers der UE zu Nachbarzellen der aktuellen bedienenden Zelle der UE zu berechnen; und
Initiieren einer Prozedur eines bedingten Handovers für ein Handover der UE zu Nachbarzellen, für die die Wahrscheinlichkeit des Handovers über einem ersten Handover-Schwellenwert liegt.

18. Verwaltungsknoten nach Anspruch 17, wobei die Verarbeitungsschaltungsanordnung ferner dazu konfiguriert ist, die Schritte nach einem der Ansprüche 2 bis 15 auszuführen.

## Revendications

1. Procédé mis en œuvre par ordinateur (200) pour gérer un transfert intercellulaire conditionnel d'un équipement utilisateur, UE, dans un réseau de communication cellulaire, dans lequel le réseau de communication comprend une pluralité de ressources radio, chaque ressource radio définissant une dimension d'un espace radio multidimensionnel sur lequel s'étend le réseau de communication, le procédé étant réalisé par un nœud de gestion, comprenant :
la réception d'un rapport de mesures de ressources radio réalisées par un UE (210) ;
l'attribution d'un emplacement radio courant de l'UE à une zone radio du réseau de communication sur la base du contenu du rapport (220), dans lequel une zone radio comprend une région de l'espace radio multidimensionnel sur lequel s'étend le réseau de communication qui est définie par une combinaison particulière de caractéristiques de champ radio, et dans lequel chaque cellule du réseau de communication comprend une pluralité de zones radio (220a) ;
la mise à jour, dans une base de données, d'une trajectoire de l'UE à travers l'espace radio du réseau de communication avec la zone radio à laquelle l'emplacement radio courant de l'UE est attribué (230) ;
l'utilisation de la trajectoire mise à jour pour calculer une probabilité de transfert intercellulaire de l'UE à des cellules voisines de la cellule de desserte courante de l'UE (240) ; et
l'initiation d'une procédure de transfert intercellulaire conditionnel pour un transfert intercellulaire de l'UE à des cellules voisines pour lesquelles la probabilité de transfert intercellulaire est supérieure à une première valeur seuil de transfert intercellulaire (250).

2. Procédé selon la revendication 1, comprenant en outre :
la mise à jour de la probabilité calculée de transfert intercellulaire de l'UE à des cellules voisines de la cellule de desserte courante de l'UE sur la base d'un rapport nouvellement reçu de mesures de ressources radio réalisées par un UE (360) ; et
l'annulation de la procédure de transfert intercellulaire conditionnel pour un transfert intercellulaire de l'UE à des cellules voisines pour lesquelles la probabilité de transfert intercellulaire est devenue inférieure à une deuxième valeur seuil de transfert intercellulaire (370).

3. Procédé selon la revendication 1 ou 2, dans lequel l'attribution d'un emplacement radio courant de l'UE à une zone radio du réseau de communication sur la base du contenu du rapport comprend :
la classification d'un vecteur de mesures de ressources radio contenues dans le rapport dans une zone radio (320i) ; et
l'attribution d'un emplacement radio courant de l'UE à la zone radio dans laquelle le vecteur est classé (320ii).

4. Procédé selon l'une quelconque des revendications précédentes, dans lequel la mise à jour, dans une base de données, d'une trajectoire de l'UE à travers l'espace radio du réseau de communication avec la zone radio à laquelle l'UE est attribué comprend :
l'ajout, à la trajectoire, d'un uplet d'horodatage, d'identifiant de zone radio et d'identifiant de transition pour une transition depuis la zone radio précédente de la trajectoire (330i).

5. Procédé selon l'une quelconque des revendications précédentes, dans lequel la mise à jour, dans une base de données, d'une trajectoire de l'UE à travers l'espace radio du réseau de communication avec la zone radio à laquelle l'UE est attribué comprend :
la troncature de la trajectoire mise à jour sur une fenêtre glissante (330ii) ;
la comparaison de la trajectoire tronquée à chacun d'un ensemble de candidates de trajectoires survenant fréquemment (330iii) ; et
pour toute trajectoire de l'ensemble de candidates de trajectoires survenant fréquemment à laquelle correspond la trajectoire tronquée, l'incrémentation d'un compteur de fréquences de la trajectoire (330iv).

6. Procédé selon l'une quelconque des revendications précédentes, comprenant en outre :
la classification d'un taux de changement de l'environnement de ressources radio de l'UE sur la base de la trajectoire mise à jour (335).

7. Procédé selon la revendication 6, dans lequel la classification d'un taux de changement de l'environnement de ressources radio de l'UE sur la base de la trajectoire mise à jour comprend :
le calcul d'une distance parcourue par l'UE sur l'espace radio multidimensionnel sur la base des zones radio présentes dans la trajectoire mise à jour de l'UE sur une fenêtre glissante (335i) ;
la division de la distance calculée par un temps de parcours par l'UE de la distance calculée pour obtenir un taux de changement de l'environnement de ressources radio de l'UE (335ii) ; et
la classification du taux de changement obtenu dans l'une d'une pluralité de classifications (335iii).

8. Procédé selon l'une quelconque des revendications précédentes, dans lequel l'utilisation de la trajectoire mise à jour pour calculer une probabilité de transfert intercellulaire de l'UE à des cellules voisines de la cellule de desserte courante de l'UE comprend :
la prédiction d'une zone radio suivante à travers laquelle passe l'UE sur la base de la trajectoire mise à jour de l'UE et d'un enregistrement de trajectoires précédemment parcourues par des UE accédant au réseau de communication (340i).

9. Procédé selon la revendication 8, dans lequel la prédiction d'une zone radio suivante à travers laquelle passe l'UE sur la base de la trajectoire mise à jour de l'UE et d'un enregistrement de trajectoires précédemment parcourues par des UE accédant au réseau de communication comprend :
la comparaison de la trajectoire mise à jour de l'UE à chacune d'un ensemble de candidates de trajectoires survenant fréquemment sur une fenêtre glissante (340ib) ; et
pour chaque trajectoire de l'ensemble de candidates de trajectoires survenant fréquemment à laquelle correspond la trajectoire mise à jour, le calcul d'une probabilité conditionnelle de la transition de l'UE à la zone radio suivante dans la trajectoire sur la base d'une fréquence de parcours de cette trajectoire par des UE accédant au réseau (340ic).

10. Procédé selon la revendication 8 ou 9, dans lequel l'utilisation de la trajectoire mise à jour pour calculer une probabilité de transfert intercellulaire de l'UE à des cellules voisines de la cellule de desserte courante de l'UE comprend en outre :
l'identification de zones radio suivantes dont la traversée par l'UE est prédite et qui correspondent à une cellule voisine de la cellule de desserte courante de l'UE (340ii) ; et
pour les cellules voisines auxquelles correspondent les zones radio suivantes identifiées, le calcul d'une probabilité de transfert intercellulaire à la cellule voisine sur la base de probabilités conditionnelles de la transition de l'UE à toute zone radio correspondant à la cellule identifiée (340iii).

11. Procédé selon l'une quelconque des revendications précédentes, dans lequel l'initiation d'une procédure de transfert intercellulaire conditionnel pour un transfert intercellulaire de l'UE à des cellules voisines pour lesquelles la probabilité de transfert intercellulaire est supérieure à une première valeur seuil de transfert intercellulaire comprend :
pour une cellule voisine pour laquelle la probabilité de transfert intercellulaire est supérieure à la première valeur seuil de transfert intercellulaire :
la génération de paramètres de transfert intercellulaire pour un transfert intercellulaire de l'UE à la cellule voisine (350i) ;
l'envoi d'une demande de transfert intercellulaire conditionnel à la cellule voisine (350ii) ; et
l'envoi des paramètres de transfert intercellulaire générés à la cellule de desserte de l'UE pour leur transfert à l'UE (350iii).

12. Procédé selon la revendication 11, dans lequel, pour une cellule voisine pour laquelle la probabilité de transfert intercellulaire est supérieure à la première valeur seuil de transfert intercellulaire, la génération de paramètres de transfert intercellulaire pour un transfert intercellulaire de l'UE à la cellule voisine comprend :
l'estimation d'une probabilité que l'UE reste dans la cellule voisine pendant un temps seuil de séjour (350ia) ; et
la génération d'au moins l'un parmi une marge de transfert intercellulaire et un temps jusqu'au déclenchement de transfert intercellulaire sur la base de la probabilité estimée (350ib).

13. Procédé selon la revendication 11 ou 12, lorsqu'elle dépend de la revendication 6 ou 7, dans lequel, pour une cellule voisine pour laquelle la probabilité de transfert intercellulaire est supérieure à la première valeur seuil de transfert intercellulaire, la génération de paramètres de transfert intercellulaire pour un transfert intercellulaire de l'UE à la cellule voisine comprend :
la génération d'au moins l'un parmi une marge de transfert intercellulaire et un temps jusqu'au déclenchement de transfert intercellulaire sur la base d'une mesure d'un taux de changement de l'environnement de ressources radio de l'UE (350ib).

14. Procédé selon l'une quelconque des revendications 11 à 13, dans lequel, pour une cellule voisine pour laquelle la probabilité de transfert intercellulaire est supérieure à la première valeur seuil de transfert intercellulaire, la génération de paramètres de transfert intercellulaire pour un transfert intercellulaire de l'UE à la cellule voisine comprend :
l'augmentation d'une marge de transfert intercellulaire ou d'un temps jusqu'au déclenchement de transfert intercellulaire avec au moins l'une parmi (350ic) :
la réduction d'un taux de changement de l'environnement de ressources radio ;
la réduction d'une probabilité que l'UE reste dans la cellule voisine pendant un temps seuil de séjour.

15. Procédé selon l'une quelconque des revendications précédentes, comprenant en outre :
la mise à jour d'une définition de zones radio sur la base de rapports reçus de mesures de ressources radio réalisées par l'UE (390).

16. Produit programme informatique comprenant un support lisible par ordinateur, un code lisible par ordinateur étant incorporé au support lisible par ordinateur, le code lisible par ordinateur étant configuré de sorte que, lorsqu'il est exécuté par un processeur d'un nœud de gestion, le nœud de gestion soit amené à réaliser un procédé selon l'une quelconque des revendications 1 à 15.

17. Nœud de gestion (1300) pour gérer un transfert intercellulaire conditionnel d'un équipement utilisateur, UE, dans un réseau de communication cellulaire, dans lequel le réseau de communication comprend une pluralité de ressources radio, chaque ressource radio définissant une dimension d'un espace radio multidimensionnel sur lequel s'étend le réseau de communication, le nœud de gestion comprenant une circuiterie de traitement (1302) configurée pour :
recevoir un rapport de mesures de ressources radio réalisées par un UE ;
attribuer un emplacement radio courant de l'UE à une zone radio du réseau de communication sur la base du contenu du rapport, dans lequel une zone radio comprend une région de l'espace radio multidimensionnel sur lequel s'étend le réseau de communication qui est définie par une combinaison particulière de caractéristiques de champ radio, et dans lequel chaque cellule du réseau de communication comprend une pluralité de zones radio ;
mettre à jour, dans une base de données, une trajectoire de l'UE à travers l'espace radio du réseau de communication avec la zone radio à laquelle l'emplacement radio courant de l'UE est attribué ;
utiliser la trajectoire mise à jour pour calculer une probabilité de transfert intercellulaire de l'UE à des cellules voisines de la cellule de desserte courante de l'UE ; et
initier une procédure de transfert intercellulaire conditionnel pour un transfert intercellulaire de l'UE à des cellules voisines pour lesquelles la probabilité de transfert intercellulaire est supérieure à une première valeur seuil de transfert intercellulaire.

18. Nœud de gestion selon la revendication 17, dans lequel la circuiterie de traitement est en outre configurée pour réaliser les étapes selon l'une quelconque des revendications 2 à 15.
